# EUROPEAN PATENT APPLICATION

(11) **EP 4 628 956 A1**
(43) Date of publication of application: **08.10.2025**
(21) Application number: 25160998.8
(22) Date of filing: 28.02.2025
(51) Int. Cl.: G02B 6/36, G02B 6/42

(54) **METHOD FOR MANUFACTURING OPTICAL FIBER ASSEMBLY, AND OPTICAL FIBER ASSEMBLY**

(30) Priority: 05.04.2024 JP 2024061515
(71) Applicant: HOSIDEN CORPORATION, Yao-shi, Osaka 581-0071 (JP)
(72) Inventor: TANIGUCHI, Keiichi, Yao-shi, 581-0071 (JP)
(74) Representative: Gill Jennings & Every LLP

(57) **Abstract**

The invention enables application of a translucent resin in a state where an optical fiber is fixed. In a method for manufacturing an assembly A1, a fixable portion 220 of an optical fiber 200 is arranged in a positioning groove 120 of a base 100, and a distal portion 210 of the optical fiber 200 is arranged in a light reflecting groove 110. A first resin part 300 is applied, and a first portion 310 of the applied first resin part 300 flows through the positioning groove 120 and then into a relief groove 130, and a second portion 320 of the applied first resin part 300 flows into the positioning groove 120. The first portion 310 is solidified in the relief groove 130 and the second portion 320 is solidified in the positioning groove 120 to fix the fixable portion 220 to a wall 121 of the positioning groove 120. A second resin part 400 is applied to fill the light reflecting groove 110 and adhere to the solidified first portion 310, a mirror face 111 and an opposite face 112 of the light reflecting groove 110, and the distal portion 210. The second resin part 400 is solidified.

## Description

### TECHNICAL FIELD

The invention relates to methods for manufacturing optical fiber assemblies and also relates to optical fiber assemblies.

### BACKGROUND ART

JP 2000-098192 A describes a conventional optical fiber assembly. The optical fiber assembly includes a silicon substrate, an optical fiber, a PD chip, translucent resin, and fixing resin. On a surface of the silicon substrate there are formed a first V-groove, a second V-groove, and a gap groove. The first V-groove and the second V-groove are arranged to be spaced apart from each other in the longitudinal direction thereof. The second V-groove is narrower and shallower than the first V-groove, and has a mirror face located on one side in the longitudinal direction. The gap groove is provided between, and extends orthogonal to, the first V-groove and the second V-groove. The optical fiber has a distal portion on the one side in the longitudinal direction and a fixable portion located on the other side in the longitudinal direction relative to the distal portion. The distal portion of the optical fiber is arranged in the gap groove and faces the mirror face of the second V-groove, and the fixable portion of the optical fiber is received in the first V-groove. The PD chip is mounted on the surface of the silicon substrate and is optically connected to the optical fiber via the mirror face of the second V-groove. The translucent resin is applied to, and covers, the distal portion of the optical fiber, the gap groove, the second V-groove, and the PD chip. The fixing resin is applied to the fixable portion of the optical fiber and the surface of the silicon substrate so as to cover the translucent resin, and fixes the fixable portion of the optical fiber to the silicon substrate.

### SUMMARY OF INVENTION

### Technical Problem

In the conventional optical fiber assembly, the application of the translucent resin may cause the optical fiber to move. This is because the distal portion of the optical fiber is only placed in the gap groove, and the fixable portion of the optical fiber is only accommodated in the first V-groove.

The invention provides a method for manufacturing an optical fiber assembly which enables application of a translucent resin in a state where an optical fiber is fixed. The invention provides such optical fiber assembly.

### Solution to Problem

A method for manufacturing an optical fiber assembly according to a first aspect of the invention includes preparing a base; preparing at least one optical fiber; arranging the at least one optical fiber on the base; applying at least one first resin part; solidifying the applied at least one first resin part; applying a second resin part having translucency, and having a refractive index substantially equal to a refractive index of a core of the at least one optical fiber and/or having a refractive index of approximately 1.4 to approximately 1.6; and solidifying the applied second resin part.

The base includes a first face with a light reflecting groove, at least one positioning groove, and a relief groove. The first face is a face of the base on one side in a first direction. The first direction is a thickness direction of the base. The light reflecting groove is a groove opening to the one side in the first direction and includes a mirror face on one side in a second direction and an opposite face facing the mirror face. The second direction is substantially orthogonal to the first direction. The at least one positioning groove is at least one elongated groove extending from the light reflecting groove to the other side in the second direction, opening to the one side in the first direction, and communicating with the light reflecting groove. The relief groove is a close-bottomed hole extending from the light reflecting groove to the other side in the first direction. The relief groove communicates with the light reflecting groove and the at least one positioning groove, or alternatively communicates with the light reflecting groove and communicates with the at least one positioning groove via the light reflecting groove.

The at least one optical fiber includes a distal portion on the one side in the second direction and a fixable portion on the other side in the second direction relative to the distal portion. The distal portion of the at least one optical fiber includes a distal face on the one side in the second direction of the at least one optical fiber.

The arranging of the at least one optical fiber on the base includes arranging the fixable portion of the at least one optical fiber into the at least one positioning groove and arranging the distal portion of the at least one optical fiber into the light reflecting groove such that the distal face of the at least one optical fiber faces the mirror face of the light reflecting groove.

The applying of the at least one first resin part includes, after the arranging of the at least one optical fiber on the base, applying the at least one first resin part in a molten state into the at least one positioning groove, allowing a first portion of the at least one applied first resin part to flow through the at least one positioning groove, or alternatively through the at least one positioning groove and the light reflecting groove, and then into the relief groove, and allowing a second portion of the at least one applied first resin part to flow into the at least one positioning groove and to adhere to the fixable portion of the at least one optical fiber and a wall of the at least one positioning groove.

The solidifying of the at least one first resin part includes solidifying the first portion of the at least one first resin part in the relief groove and solidifying the second portion of the at least one first resin part in the at least one positioning groove to fix the fixable portion of the at least one optical fiber to the wall of the at least one positioning groove.

The applying of the second resin part includes, after the solidifying of the at least one first resin part, applying the second resin part in a molten state into the light reflecting groove so that the second resin part fills at least the light reflecting groove and adheres to the first portion of the at least one solidified first resin part, the mirror face of the light reflecting groove, the opposite face of the light reflecting groove, and the distal portion of the at least one optical fiber.

A method for manufacturing an optical fiber assembly according to a second aspect of the invention includes steps of applying at least one first resin part, solidifying the at least one first resin part, and applying a second resin part that are different in the following respects from the corresponding steps in the method according to the first aspect of the invention.

The applying of the at least one first resin part includes, after the arranging of the at least one optical fiber on the base, applying the at least one first resin part in a molten state into the at least one positioning groove, and allowing the at least one first resin part to adhere to the fixable portion of the at least one applied optical fiber and the wall of the at least one positioning groove.

The solidifying of the at least one first resin part includes solidifying the at least one first resin part in the at least one positioning groove to fix the fixable portion of the at least one optical fiber to the wall of the at least one positioning groove.

The applying of the second resin part includes, after the solidifying of the at least one first resin part, applying the second resin part in a molten state into the light reflecting groove and/or the relief groove so that the second resin part fills the light reflecting groove and the relief groove and adheres to the at least one first resin part, the mirror face of the light reflecting groove, the opposite face of the light reflecting groove, and the distal portion of the at least one optical fiber.

An optical fiber assembly according to a first aspect of the invention includes the base, the at least one optical fiber, the at least one first resin part, and the second resin part having translucency. The second resin part has a refractive index substantially equal to a refractive index of a core of the at least one optical fiber and/or having a refractive index of approximately 1.4 to approximately 1.6. The distal portion of the at least one optical fiber is arranged in the light reflecting groove such that the distal face of the distal portion faces the mirror face of the light reflecting groove. The fixable portion of the at least one optical fiber is arranged in the at least one positioning groove. The at least one first resin part includes the first portion and the second portion. The first portion of the at least one first resin part fills the relief groove at least partly. The second portion of the at least one optical fiber fills the at least one positioning groove and fixes the fixable portion of the at least one optical fiber to the wall of the at least one positioning groove. The second resin part fills at least the light reflecting groove and is fixed to the first portion of the at least one first resin part, the mirror face of the light reflecting groove, the opposite face of the light reflecting groove, and the distal portion of the at least one optical fiber.

The at least one first resin part may not fill the relief groove at least partly, but the at least one first resin part may fill the at least one positioning groove and fix the fixable portion of the at least one optical fiber to the wall of the at least one positioning groove. In this case, the second resin part may fill the light reflecting groove and the relief groove and may be fixed to the at least one first resin part, the mirror face of the light reflecting groove, the opposite face of the light reflecting groove, and the distal portion of the at least one optical fiber.

### Advantageous Effects of Invention

The optical fiber assemblies of the invention and the manufacturing methods therefor make it possible to apply the second resin part having translucency at least into the light reflecting groove of the base after fixing the fixable portion of at least one optical fiber to the at least one positioning groove of the base with the at least one first resin part. This reduces a risk that the at least one optical fiber may move when the second resin part is applied.

### BRIEF DESCRIPTION OF DRAWINGS

Fig. 1 is a schematic cross-sectional perspective view of an optical fiber assembly according to a first embodiment of the invention.
Fig. 2 is a schematic exploded perspective view of a base, a plurality of optical fibers, an optical device, and a retainer of the optical fiber assembly of the first embodiment.
Fig. 3A is a schematic cross-sectional view of the optical fiber assembly of the first embodiment.
Fig. 3B is a schematic rear view of the optical fiber assembly of the first embodiment.
Fig. 4A is a schematic rear view of a first variant of the optical fiber assembly of the first embodiment.
Fig. 4B is a schematic rear view of a second variant of the optical fiber assembly of the first embodiment.
Fig. 4C is a schematic rear view of a third variant of the optical fiber assembly of the first embodiment.
Fig. 5 illustrates steps of a method for manufacturing the optical fiber assembly of the first embodiment.
Fig. 6 is a schematic cross-sectional view illustrating a step of applying a plurality of first resin parts in the method for manufacturing the optical fiber assembly of the first embodiment.
Fig. 7 is a schematic plan view of a step of applying a second resin part in the method for manufacturing the optical fiber assembly of the first embodiment.
Fig. 8 illustrates steps of a method for manufacturing an optical fiber assembly of a comparative example.
Fig. 9 is a schematic cross-sectional perspective view of an optical fiber assembly according to a second embodiment of the invention.
Fig. 10 illustrates steps of a method for manufacturing the optical fiber assembly of the second embodiment.

In the brief description of the drawings above and the description of embodiments which follows, relative spatial terms such as "upper", "lower", "top", "bottom", "left", "right", "front", "rear", etc., are used for the convenience of the skilled reader and refer to the orientations of the optical fiber assemblies and their constituent parts as depicted in the drawings. No limitation is intended by use of these terms, either in use of the invention, during its manufacture, shipment, custody, or sale, or during assembly of its constituent parts or when incorporated into or combined with other apparatus.

### DESCRIPTION OF EMBODIMENTS

A plurality of embodiments of the invention, including first and second embodiments and variants thereof, will now be described. It should be noted that constituents of the embodiments and their variants to be described can be combined in any possible manner. It should also be noted that the materials, the shapes, the dimensions, the numbers, the arrangements, etc. of the constituents of the embodiments and their variants to be described are presented by way of example only and can be modified in any manner as long as the same functions can be fulfilled.

### First Embodiment

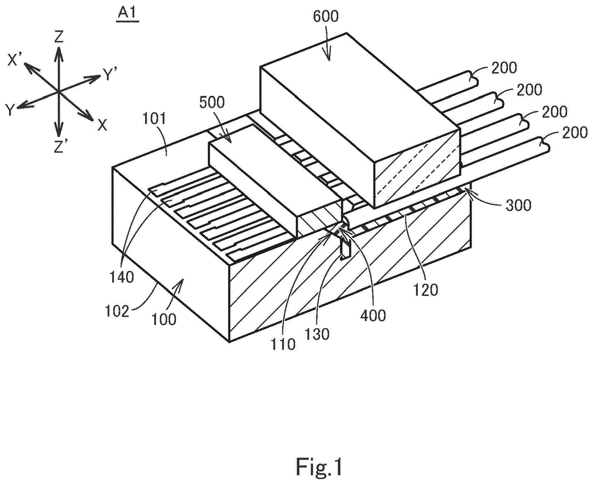

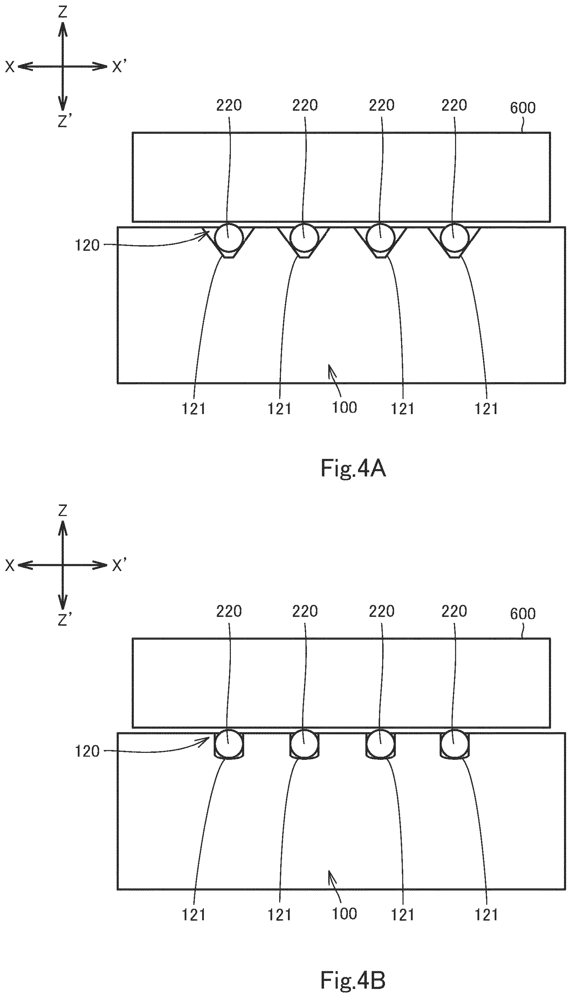

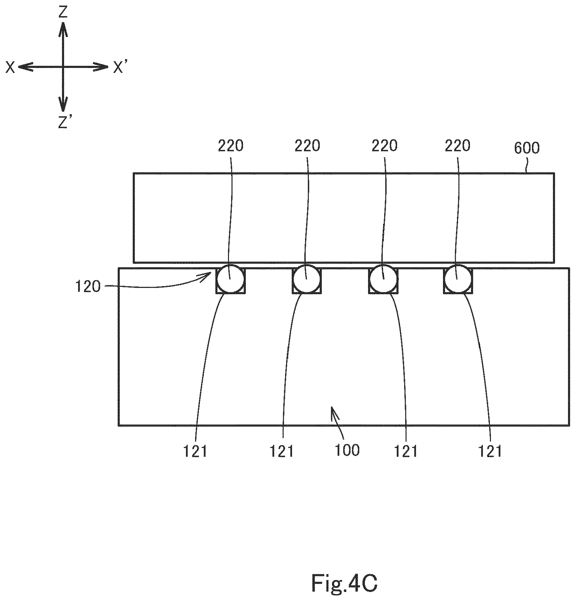

An optical fiber assembly A1 (which may be referred to simply as "assembly A1") according to a plurality of embodiments, including the first embodiment of the invention and variants thereof, will now be described with reference to Figs. 1 to 3B. Figs. 1 to 3B illustrate the optical fiber assembly A1 of the first embodiment. Fig. 4A illustrates a first variant of the optical fiber assembly A1 of the first embodiment. Fig. 4B illustrates a second variant of the optical fiber assembly A1 of the first embodiment. Fig. 4C illustrates a third variant of the optical fiber assembly A1 of the first embodiment. Figs. 1 to 4C show a Z-Z' direction (first direction). The Z-Z' direction includes a Z direction (one side in the first direction) and a Z' direction (the other side in the first direction). Figs. 1 to 3A show a Y-Y' direction (second direction). The Y-Y' direction is substantially orthogonal to the Z-Z' direction and includes a Y direction (one side in the second direction) and a Y' direction (the other side in the second direction). Figs. 1, 2, and 3B to 4C show an X-X' direction (third direction). The X-X' direction is substantially orthogonal to the Z-Z' and Y-Y' directions, and includes an X direction (one side in the third direction) and an X' direction (the other side in the third direction).

The assembly A1 includes a base 100 and at least one optical fiber 200.

The at least one optical fiber 200 may be a single optical fiber or a plurality of optical fibers. For convenience of description, the at least one optical fiber 200 will be described as a plurality of optical fibers. However, also in a case where a single optical fiber 200 is provided, the optical fiber 200 may be configured similarly to each of the optical fibers 200.

Each optical fiber 200 may be either a single-mode fiber or a multi-mode fiber (for example, a step-index optical fiber, a graded-index optical fiber, or the like). Each optical fiber 200 includes a cylindrical core (not illustrated) extending in the Y-Y' direction and a tubular cladding (not illustrated) extending in the Y-Y' direction. The core is constituted by a glass, a silicon resin, acrylic resin, or the like material that is optically transparent to optical signals (for example, the core is transparent or translucent). The core has a refractive index of approximately 1.4 to approximately 1.6. The cladding is constituted by a glass, a silicon resin, or an acrylic resin that is optically transparent to optical signals (for example, the cladding is transparent or translucent), and covers the core. The cladding has a refractive index lower than that of the core (for example, lower by about 1%). The difference in refractive index between the core and the cladding allows optical signals to travel inside the core. Some examples of the glass referred to above include quartz glass and multicomponent glass. The acrylic resin may be polymethyl methacrylate resin (PMMA) or the like.

Each optical fiber 200 includes a distal portion 210 on the Y-direction side and a fixable portion 220. The distal portion 210 of each optical fiber 200 includes a distal face 211 on the Y-direction side of each optical fiber 200. The fixable portion 220 of each optical fiber 200 is located on the Y'-direction side relative to the distal portion 210 of each optical fiber 200.

The base 100 is a silicon (Si) substrate, a silicon-on-insulator (SOI) substrate, a metal plate, a resin plate, or the like. The base 100 includes a first face 101 and a second face 102. The first face 101 is a face on the Z-direction side of the base 100, and the second face 102 is a face on the Z'-direction side of the base 100. Note that the Z-Z' direction is a thickness direction of the base 100.

The base 100 further includes a light reflecting groove 110, at least one positioning groove 120, and a relief groove 130. The at least one positioning groove 120 may be a single positioning groove or a plurality of positioning grooves, corresponding to the number of the at least one optical fiber 200. For convenience of description, the at least one positioning groove 120 will be described as a plurality of positioning grooves in accordance with the number of the plurality of optical fibers 200. However, also in a case where a single positioning groove 120 is provided, the positioning groove 120 may be configured similarly to each of the positioning grooves 120.

The light reflecting groove 110, the plurality of positioning grooves 120, and the relief groove 130 are provided in the first face 101 of the base 100. Where the base 100 is a Si substrate or an SOI substrate, the light reflecting groove 110, the plurality of positioning grooves 120, and the relief groove 130 may be formed, for example, by providing a mask by photolithography on the first face 101 of the base 100 and then performing crystal anisotropic etching or the like to openings of the mask. Where the base 100 is a metal plate or a resin plate, the light reflecting groove 110, the plurality of positioning grooves 120, and the relief groove 130 may be formed, for example, by laser processing the first face 101 of the base 100, or by providing a mask by photolithography on the first face 101 of the base 100 and then performing solvent etching or chemical etching to openings of the mask.

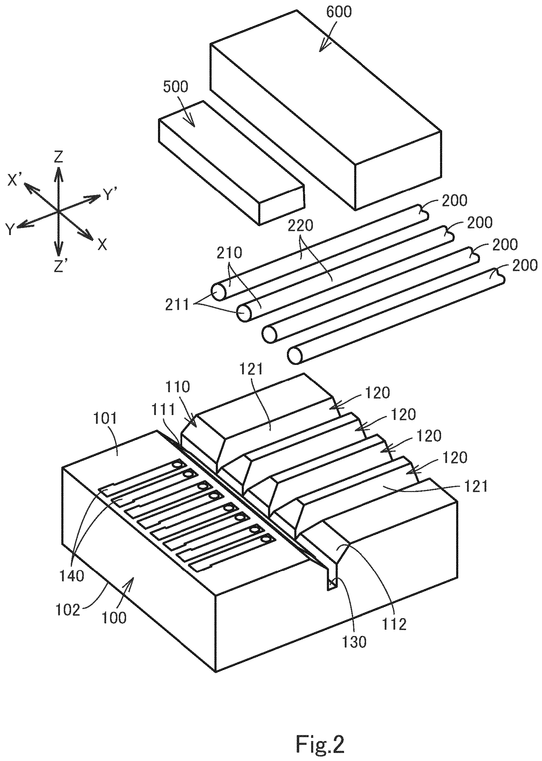

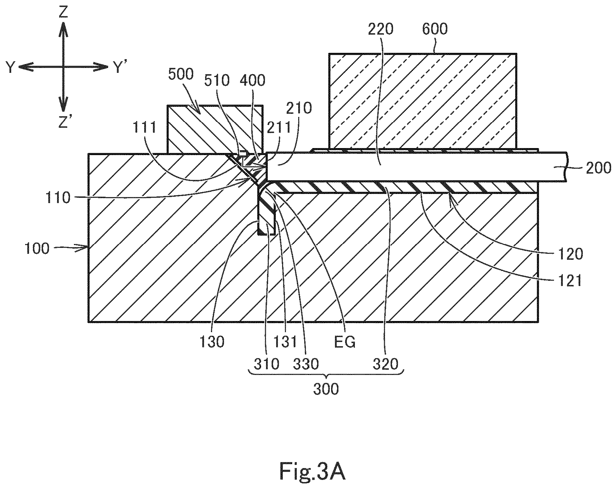

The light reflecting groove 110 is a groove opening in the Z direction. The light reflecting groove 110 may be an elongated groove extending in the X-X' direction. The light reflecting groove 110 may extend through the base 100 in the X-X' direction. The light reflecting groove 110 has a dimension in the X-X' direction that is larger than a linear distance in the X-X' direction from an edge on the X-direction side of the endmost positioning groove 120 on the X-direction side to an edge on the X'-direction side of the endmost positioning groove 120 on the X'-direction side (see Figs. 1 and 2). The endmost positioning groove 120 on the X-direction side is one of the positioning grooves 120 that is positioned on the most X-direction side. The endmost positioning groove 120 on the X'-direction side is one of the positioning grooves 120 that is positioned on the most X'-direction side. The light reflecting groove 110 includes a mirror face 111 on the Y-direction side and an opposite face 112 on the Y'-direction side. The mirror face 111 may include a metal film formed on the mirror face 111 by a metal vapor deposition method, or alternatively the mirror face 111 may be mirror-finished by polishing or the other means. The mirror face 111 extends in a first oblique direction including components of the Y and Z directions (see Figs. 2 and 3A). The opposite face 112 is only required to face the mirror face 111, and may extend in a second oblique direction including components of the Y' and Z directions (see Fig. 2), in the Z direction, or in other directions (not illustrated).

The plurality of positioning grooves 120 are elongated grooves extending in the Y' direction from the light reflecting groove 110, open in the Z direction, and open in the Y' direction. The plurality of positioning grooves 120 communicate with the light reflecting groove 110. The plurality of positioning grooves 120 are spaced apart from each other in the X-X' direction.

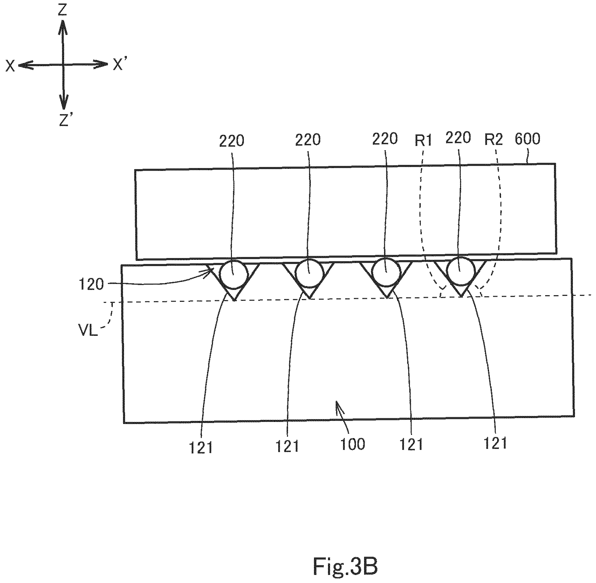

Each positioning groove 120 may have, for example, a generally V-shape (see Fig. 3B), an inverted trapezoidal shape (see Fig. 4A), a generally U-shape (see Fig. 4B), a generally square U-shape (Fig. 4C), or the like shape, in a first cross-sectional view taken along the Z-Z' and X-X' directions. Each positioning groove 120 includes a wall 121.

Where each positioning groove 120 has the generally V-shape in the first cross-sectional view, the wall 121 of each positioning groove 120 has a generally V-shape in the first cross-sectional view (see Fig. 3B), and includes a first wall on the X-direction side and a second wall on the X'-direction side. The first wall and the second wall each include a first end on the Z'-direction side, a second end on the Z-direction side, and an intermediate portion between the first and second ends. The first ends of the first and second walls are connected to each other, the first wall extends from the first end to the second end thereof in a third oblique direction including components of the X and Z directions, and the second wall extends from the first end to the second end thereof in a fourth oblique direction including components of the X' and Z directions. Each of an inclination angle R1 of the first wall and an inclination angle R2 of the second wall may, but is not required to, be approximately 54.7 degrees with respect to an imaginary line VL extending in the X-X' direction through the first ends of the first and second walls. A linear distance in the X-X' direction between the intermediate portion of the first wall and the intermediate portion of the second wall is smaller than a diameter of the fixable portion 220 of each optical fiber 200.

Where the plurality of positioning grooves 120 each have the inverted trapezoidal shape in the first cross-sectional view, the walls 121 of the plurality of positioning grooves 120 each include a first wall on the X-direction side, a second wall on the X'-direction side, and a third wall on the Z'-direction side (see Fig. 4A). The first wall and the second wall each have a first end on the Z'-direction side, a second end on the Z-direction side, and an intermediate portion between the first and second ends. The third wall has a first end on the X-direction side and a second end on the X'-direction side. The first end of the first wall is connected to the first end of the third wall, and the first end of the second wall is connected to the second end of the third wall. The first wall extends in the third oblique direction from the end on the X-direction side of the third wall, and the second wall extends in the fourth oblique direction from the end on the X'-direction side of the third wall. A linear distance in the X-X' direction between the intermediate portion of the first wall and the intermediate portion of the second wall is smaller than the diameter of the fixable portion 220 of each optical fiber 200.

Where the plurality of positioning grooves 120 each have the generally U-shape in the first cross-sectional view, the walls 121 of the plurality of positioning grooves 120 each have a generally U-shape in the first cross-sectional view (see Fig. 4B), and each include a first wall on the X-direction side, a second wall on the X'-direction side, and a third wall on the Z'-direction side. In the first cross-sectional view, the third wall is curved in a generally arc shape or a generally U-shape, and has a first end on the X-direction side and a second end on the X'-direction side. The first wall extends in the Z direction from the first end of the third wall, and the second wall extends in the Z direction from the second end of the third wall. A linear distance in the X-X' direction between the first wall and the second wall is substantially the same as the diameter of the fixable portion 220 of each optical fiber 200.

Where the plurality of positioning grooves 120 each have the generally square U-shape in the first cross-sectional view, the walls 121 of the plurality of positioning grooves 120 each have a generally square U-shape (see Fig. 4C) in the first cross-sectional view, and each include a first wall on the X-direction side, a second wall on the X'-direction side, and a third wall on the Z'-direction side. The third wall has a first end on the X-direction side and a second end on the X'-direction side. The first wall extends in the Z direction from the first end of the third wall, and the second wall extends in the Z direction from the second end of the third wall. A linear distance in the X-X' direction between the first wall and the second wall is substantially the same as the diameter of the fixable portion 220 of each optical fiber 200.

The relief groove 130 is a close-bottomed hole extending in the Z' direction from the light reflecting groove 110. The relief groove 130 may communicate with the light reflecting groove 110 and the plurality of positioning grooves 120, or alternatively may communicate with the light reflecting groove 110 and communicate with the plurality of positioning grooves 120 via the light reflecting groove 110. The relief groove 130 may be an elongated groove extending in the X-X' direction. The relief groove 130 may extend through the base 100 in the X-X' direction. The relief groove 130 has a dimension in the X-X' direction that is larger than the linear distance in the X-X' direction from the edge on the X-direction side of the endmost positioning groove 120 on the X-direction side to the edge on the X'-direction side of the endmost positioning groove 120 on the X'-direction side. The dimension in the X-X' direction of the relief groove 130 may be the same as, or different from, the dimension in the X-X' direction of the light reflecting groove 110.

The relief groove 130 may have a generally square U-shape (see Fig. 3), an inverted trapezoidal shape (not illustrated), a generally U-shape (not illustrated), a generally V-shape (not illustrated), or any other shape, in a second cross-sectional view taken along the Z-Z' and Y-Y' directions. The relief groove 130 includes a wall 131 on the Y'-direction side. The wall 131 of the relief groove 130 extends in a direction including a component of the Z-Z' direction, e.g., in the Z-Z' direction or in the second oblique direction. The wall 131 of the relief groove 130 meets the walls 121 of the plurality of positioning grooves 120. The portions (corners) where the wall 131 meets the walls 121 form a plurality of edges EG.

Where the plurality of positioning grooves 120 each have the generally V-shape in the first cross-sectional view (see Fig. 3B), the wall 131 of the relief groove 130 meets the first ends of the first and second walls of the walls 121 of the plurality of positioning grooves 120. The portions (corners) where the wall 131 meets the first ends form a plurality of edges EG.

Where the plurality of positioning grooves 120 each have the inverted trapezoidal shape (see Fig. 4A), the generally U-shape (see Fig. 4B), or the generally square U-shape (see Fig. 4C) in the first cross-sectional view, the wall 131 of the relief groove 130 meets the third walls of the walls 121 of the plurality of positioning grooves 120. The portions (corners) where the wall 131 meets the third walls form a plurality of edges EG.

The fixable portions 220 of the plurality of optical fibers 200 are arranged in the respective positioning grooves 120. The first walls of the walls of the plurality of positioning grooves 120 abut the respective fixable portions 220 of the plurality of optical fibers 200 from the X-direction side, and the second walls of the walls of the plurality of positioning grooves 120 abut the respective fixable portions 220 of the plurality of optical fibers 200 from the X'-direction side (see Figs. 3B to 4C). This abutment allows the fixable portions 220 of the plurality of optical fibers 200 to be fixed in position in the X-X' direction in the respective positioning grooves 120. The distal portions 210 of the plurality of optical fibers 200 protrude in the Y direction from the respective positioning grooves 120, the distal portions 210 of the plurality of optical fibers 200 are arranged in the light reflecting groove 110, and the distal faces 211 of the plurality of optical fibers 200 face the mirror face 111 of the light reflecting groove 110.

Where the plurality of positioning grooves 120 each have the generally V-shape in the first cross-sectional view (see Fig. 3B), the fixable portion 220 of each of the optical fibers 200 abuts the intermediate portions of the first and second walls of the wall 121 of a corresponding one of the positioning grooves 120, is arranged on the Z-direction side relative to a portion on the Z'-direction side, relative to the intermediate portions, of the first and second walls of the wall 121 of the corresponding positioning groove 120 with a gap therebetween, and is arranged on the Z-direction side relative to a corresponding one of the edges EG with a gap therebetween, in the first cross-sectional view.

Where the plurality of positioning grooves 120 each have the inverted trapezoidal shape in the first cross-sectional view (see Fig. 4A), the fixable portion 220 of each of the optical fibers 200 may abut the first, second, and third walls of the wall 121 of a corresponding one of the positioning grooves 120, and a portion on the X-direction side and a portion on the X'-direction side of the fixable portion 220 of each optical fiber 200 may be arranged on the Z-direction side relative to the third wall of the wall 121 of the corresponding positioning groove 120 with a gap therebetween and arranged on the Z-direction side relative to a corresponding one of the edges EG with a gap therebetween (not illustrated), in the first cross-sectional view. Alternatively, in the first cross-sectional view, the fixable portion 220 of each of the optical fibers 200 may abut the intermediate portions of the first and second walls of the wall 121 of a corresponding one of the positioning grooves 120, be arranged on the Z-direction side relative to the third wall of the wall 121 of the corresponding positioning groove 120 with a gap therebetween, and be arranged on the Z-direction side relative to a corresponding one of the edges EG with a gap therebetween (see Fig. 4A).

Where the plurality of positioning grooves 120 each have the generally U-shape (see Fig. 4B) or the generally square U-shape (see Fig. 4C) in the first cross-sectional view, the fixable portion 220 of each of the optical fibers 200 abuts the first, second, and third walls of the wall 121 of a corresponding one of the positioning grooves 120, and a portion on the X-direction side and a portion on the X'-direction side of the fixable portion 220 of each optical fiber 200 are arranged on the Z-direction side relative to the third wall of the wall 121 of the corresponding positioning groove 120 with a gap therebetween and arranged on the Z-direction side relative to a corresponding one of the edges EG with a gap therebetween (not illustrated), in the first cross-sectional view.

The base 100 may further include a plurality of connection lines 140. The plurality of connection lines 140 are provided on an edge portion of the first face 101 of the base 100 that is located on the Y-direction side relative to the light reflecting groove 110. The plurality of connection lines 140 are constituted by an electrically conductive material, such as copper foil or silver paste. The plurality of connection lines 140 extend in the Y-Y' direction and are spaced from each other in the X-X' direction.

The assembly A1 may further include an optical device 500. The optical device 500 includes a facing portion 510 facing the mirror face 111 of the light reflecting groove 110. The optical device 500 is mounted on the edge portion of the first face 101 of the base 100 on the Y-direction side relative to the light reflecting groove 110 such that the facing portion 510 faces the mirror face 111 of the light reflecting groove 110. The optical device 500 is connected to the plurality of connection lines 140.

The optical device 500 includes at least one opto-electronic converter and/or at least one electro-optical converter. The number of the at least one opto-electronic converter and/or the at least one electro-optical converter corresponds to the number of the plurality of optical fibers 200. For example, the optical device 500 may include a single opto-electronic converter and one or more electro-optical converters corresponding to the number of the plurality of optical fibers 200, may include one or more opto-electronic converters and a single electro-optical converter corresponding to the number of the plurality of optical fibers 200, may not include any electro-optical converters but include a plurality of opto-electronic converters corresponding to the number of the plurality of optical fibers 200, or alternatively, may not include any opto-electronic converters but include a plurality of electro-optical converters corresponding to the number of the plurality of optical fibers 200,

For convenience of description, the at least one opto-electronic converter may also be referred to as "the or each opto-electronic converter", and the at least one electro-optical converter may also be referred to as "the or each electro-optical converter". Where a single opto-electronic converter is provided, "the opto-electronic converter" of "the or each opto-electronic converter" means the single opto-electronic converter, and where a plurality of opto-electronic converters is provided, "each opto-electronic converter" of "the or each opto-electronic converter" means each of the opto-electronic converters. Where a single electro-optical converter is provided, "the electro-optical converter" of "the or each electro-optical converter" means the single electro-optical converter, and where a plurality of electro-optical converters is provided, "each electro-optical converter" of "the or each electro-optical converter" means each of the electro-optical converters.

The or each opto-electronic converter is a light receiving element, such as a photodiode, capable of receiving optical signals from the facing portion 510. The or each opto-electronic converter is optically connected to the core of a corresponding one of the optical fibers 200 via the mirror face 111 of the light reflecting groove 110 and electrically connected to two of the connection lines 140. Each opto-electronic converter is configured to convert optical signals incident from the corresponding optical fiber 200 into electrical signals and to output the converted electrical signals to the outside through the two connection lines 140.

The or each electro-optical converter is a light emitting element, such as a semiconductor laser (e.g., a vertical-cavity surface-emitting laser (VCSEL), an edge-emitting laser, or the like) or a light emitting diode, capable of emitting optical signals from the facing portion 510. The or each electro-optical converter is optically connected to the core of a corresponding one of the optical fibers 200 via the mirror face 111 of the light reflecting groove 110 and electrically connected to two of the connection lines 140. Each electro-optical converter is configured to convert electrical signals inputted from the two connection lines 140 into optical signals and emit the converted optical signals to a corresponding one of the optical fibers 200.

The assembly A1 may further include a retainer 600. The retainer 600 is a glass plate or the like, is placed on the first face 101 of the base 100, and abuts the fixable portions 220 of the plurality of optical fibers 200. The retainer 600 and the base 100 hold therebetween the fixable portions 220 of the plurality of optical fibers 200. The retainer 600 can be omitted.

The assembly A1 further includes at least one first resin part 300 and a second resin part 400.

The at least one first resin part 300 may be a single first resin part or a plurality of first resin parts, corresponding to the number of the at least one positioning grooves 120 of the base 100. For convenience of description, the at least one first resin part 300 will be described as a plurality of first resin parts corresponding the number of the plurality of positioning grooves 120. However, even in a case where a single first resin part 300 is provided, the first resin part 300 may be configured similarly to each of the first resin parts 300. Note that the plurality of first resin parts 300 are not shown in Figs. 2 or 3B to 4C.

The plurality of first resin parts 300 serve as fixing resin for fixing the fixable portions 220 of the plurality of optical fibers 200 to the walls 121 of the corresponding positioning grooves 120. The plurality of first resin parts 300 are each constituted by a resin (e.g., an epoxy resin, a silicone resin, an acrylic resin, or the like). The plurality of first resin parts 300 may each have no translucency, or alternatively each have translucency preferably with a refractive index lower than a range of approximately 1.4 to approximately 1.6, but is not limited thereto. The plurality of first resin parts 300 may preferably, but is not limited to, each have a fixing force (adhesive force) stronger than a fixing force of the second resin part 400. The plurality of first resin parts 300 each include a first portion 310 and a second portion 320.

The first portions 310 of the plurality of first resin parts 300 fill the relief groove 130 of the base 100 at least partly. The first portions 310 of the plurality of first resin parts 300 may be integrated together in the relief groove 130 of the base 100, or may be provided separately. Where the first portions 310 of the plurality of first resin parts 300 are integrated, the integrated first portions 310 may fill the relief groove 130 entirely (see Figs. 1 and 3A) or partly (not illustrated).

The second portions 320 of the plurality of first resin parts 300 fill the respective positioning grooves 120 of the base 100, and respectively fix the fixable portions 220 of the plurality of optical fibers 200 to the respective walls 121 of the plurality of positioning grooves 120 (see Figs. 1 and 3A).

Where the retainer 600 is provided, the second portions 320 of the plurality of first resin parts 300 are respectively fixed not only to the fixable portions 220 of the plurality of optical fibers 200 and the walls 121 of the plurality of positioning grooves 120 but also to the retainer 600.

The plurality of first resin parts 300 may further each include a third portion 330 (see Figs. 1 and 3A). The third portion 330 of each first resin part 300 is a portion between the first portion 310 of each first resin part 300 and the second portion 320 of each first resin part 300, and is arranged in the light reflecting groove 110 of the base 100. In each first resin part 300, the first portion 310, the third portion 330, and the second portion 320 are arranged continuously in this order. The third portion 330 can be omitted.

The second resin part 400 is constituted by a resin having translucency (e.g., an epoxy resin, a silicone resin, acrylic resin, or the like). The resin has a refractive index substantially equal to a refractive index of the cores of the plurality of optical fibers 200 and/or a refractive index of approximately 1.4 to approximately 1.6. The second resin part 400 fills at least the light reflecting groove 110 of the base 100. The second resin part 400 is fixed to the facing portion 510 of the optical device 500, the first portions 310 of the plurality of first resin parts 300, the mirror face 111 of the light reflecting groove 110, the opposite face 112 of the light reflecting groove 110, and the distal portions 210 of the plurality of optical fibers 200. Note that the second resin part 400 is not shown in Figs. 2 or 3B to 4C.

Where the first portions 310 of the plurality of first resin parts 300 are integrated together and fill the relief groove 130 entirely (see Figs. 1 and 3A), the second resin part 400 fills the light reflecting groove 110 of the base 100. In this case, the second resin part 400 is fixed to the facing portion 510 of the optical device 500, the integrated first portions 310 of the plurality of first resin parts 300, the mirror face 111 of the light reflecting groove 110, the opposite face 112 of the light reflecting groove 110, and the distal portions 210 of the plurality of optical fibers 200. Where the third portions 330 of the plurality of first resin parts 300 are arranged in the light reflecting groove 110, the second resin part 400 is also fixed to the third portions 330 of the plurality of first resin parts 300.

Where the first portions 310 of the plurality of first resin parts 300 are integrated together and fill the relief groove 130 partly (not illustrated), or where the first portions 310 of the plurality of first resin parts 300 are provided separately from each other and fill the relief groove 130 partly (not illustrated), the second resin part 400 fills not only the light reflecting groove 110 of the base 100 but also the remaining part of the relief groove 130. In this case, the second resin part 400 is fixed to the facing portion 510 of the optical device 500, the integrated or separate first portions 310 of the plurality of first resin parts 300, the mirror face 111 of the light reflecting groove 110, the opposite face 112 of the light reflecting groove 110, and the distal portions 210 of the plurality of optical fibers 200. Where the third portions 330 of the plurality of first resin parts 300 are arranged in the light reflecting groove 110, the second resin part 400 is also fixed to the third portions 330 of the plurality of first resin parts 300.

The second resin part 400 may, but is not required to, be configured to cover the optical device 500.

Where the retainer 600 is provided, the second resin part 400 may, but is not required to, also fill a space between the optical device 500 and the retainer 600 to be fixed to the optical device 500 and the retainer 600.

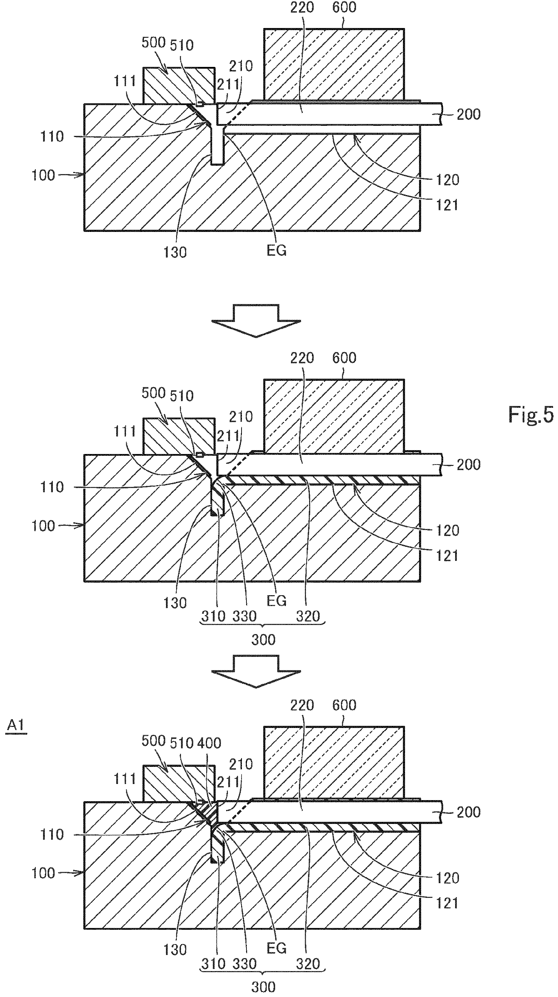

A method for manufacturing the assembly A1 will now be described with reference to Figs. 5 to 7. The method to be described concerns the assembly A1 in which the at least one optical fibers 200, the at least one positioning groove 120 of the base 100, and the at least one first resin part 300 are provided as the plurality of optical fibers 200, the plurality of positioning grooves 120, and the plurality of first resin parts 300. However, the method to be described is applicable to the assembly A1 in which the at least one optical fibers 200, the at least one positioning groove 120 of the base 100, and the at least one first resin part 300 are provided as the single optical fiber 200, the single positioning groove 120, and the single first resin part 300.

First, the base 100 is prepared. As described above, the base 100 is provided with the light reflecting groove 110, the plurality of positioning grooves 120, and the relief groove 130. Also, the optical device 500 is previously mounted on the first face 101 of the base 100 and connected to the plurality of connection lines 140.

The plurality of optical fibers 200 is prepared.

The plurality of optical fibers 200 are arranged on the base 100 (see the uppermost view of Fig. 5). At this time, the fixable portions 220 of the plurality of optical fibers 200 are arranged into the respective positioning grooves 120 of the base 100 such that the fixable portions 220 of the plurality of optical fibers 200 are brought into abutment with the first and second walls of the respective walls 121 of the plurality of positioning grooves 120, and the distal portions 210 of the plurality of optical fibers 200 are arranged into the light reflecting groove 110 such that the distal faces 211 of the plurality of optical fibers 200 face the mirror face 111 of the light reflecting groove 110 of the base 100. As a result, the cores of the plurality of optical fibers 200 are optically connected to the at least one opto-electronic converter and/or the at least one electro-optical converter of the optical device 500 via the mirror face 111 of the light reflecting groove 110 of the base 100.

Where the plurality of positioning grooves 120 each have the generally V-shape in the first cross-sectional view (see Fig. 3B and the uppermost view in Fig. 5), by arranging the fixable portions 220 of the plurality of optical fibers 200 in the respective positioning grooves 120, the fixable portion 220 of each of the optical fibers 200 is brought into abutment with the intermediate portions of the first and second walls of the wall 121 of a corresponding one of the positioning grooves 120, arranged on the Z-direction side relative to the portion on the Z'-direction side of the first and second walls of the wall 121 of the corresponding positioning groove 120 with the gap therebetween, and arranged on the Z-direction side relative to a corresponding one of the edges EG with the gap therebetween.

Where the plurality of positioning grooves 120 each have the inverted trapezoidal shape in the first cross-sectional view (see Fig. 4A), by arranging the fixable portions 220 of the plurality of optical fibers 200 in the respective positioning grooves 120, the fixable portion 220 of each of the optical fibers 200 is brought into abutment with the first, second, and third walls of the wall 121 of a corresponding one of the positioning grooves 120, and the portion on the X-direction side and the portion on the X'-direction side of the fixable portion 220 of each optical fiber 200 are arranged on the Z-direction side relative to the third wall of the wall 121 of the corresponding positioning groove 120 with the gap therebetween and arranged on the Z-direction side relative to a corresponding one of the edges EG with the gap therebetween. Alternatively, by arranging the fixable portions 220 of the plurality of optical fibers 200 in the respective positioning grooves 120, the fixable portion 220 of each of the optical fibers 200 is brought into abutment with the first and second walls of the wall 121 of a corresponding one of the positioning grooves 120, arranged on the Z-direction side relative to the third wall of the wall 121 of the corresponding positioning groove 120 with the gap therebetween, and arranged on the Z-direction side relative to a corresponding one of the edges EG with the gap therebetween.

Where the plurality of positioning grooves 120 each have the generally U-shape (see Fig. 4B) or the generally square U-shape (see Fig. 4C) in the first cross-sectional view, by arranging the fixable portions 220 of the plurality of optical fibers 200 in the respective positioning grooves 120, the fixable portion 220 of each of the optical fibers 200 is brought into abutment with the first, second, and third walls of the wall 121 of a corresponding one of the positioning grooves 120, and the portion on the X-direction side and the portion on the X'-direction side of the fixable portion 220 of each optical fiber 200 are arranged on the Z-direction side relative to the third wall of the wall 121 of the corresponding positioning groove 120 with the gap therebetween and arranged on the Z-direction side relative to a corresponding one of the edges EG with the gap therebetween.

Where the retainer 600 is to be provided, after arranging the plurality of optical fibers 200 on the base 100 as described above, the retainer 600 is placed on the first face 101 of the base 100 and brought into abutment with the fixable portions 220 of the plurality of optical fibers 200. The fixable portions 220 of the plurality of optical fibers 200 are thus held between the retainer 600 and the base 100. This step is omitted where the retainer 600 is not provided.

The optical device 500 does not have to be previously mounted on the base 100. In this case, after arranging the plurality of optical fibers 200 on the base 100 as described above, or alternatively after placing the retainer 600 on the base 100 as described above (only where the retainer 600 is provided), the optical device 500 is mounted on the edge portion of the first face 101 of the base 100 that is located on the Y-direction side relative to the light reflecting groove 110 and connected to the plurality of connection lines 140, such that the facing portion 510 faces the mirror face 111 of the light reflecting groove 110. When the optical device 500 is mounted on the first face 101 of the base 100, the cores of the plurality of optical fibers 200 are optically connected to the at least one opto-electronic converter and/or the at least one electro-optical converter of the optical device 500 via the mirror face 111 of the light reflecting groove 110 of the base 100.

After arranging the plurality of optical fibers 200 on the base 100, or alternatively after placing the retainer 600 on the base 100 (only where the retainer 600 is provided), the plurality of first resin parts 300 in a molten state are applied through a needle ND of a first application machine (not illustrated) into the respective positioning grooves 120 of the base 100.

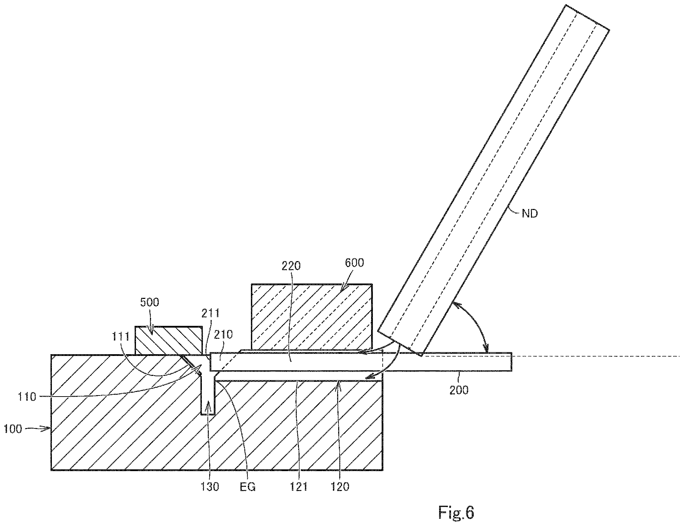

For example, the needle ND is sequentially placed from one position after another on the second oblique direction side relative to the corresponding positioning grooves 120 (see Fig. 6), and the plurality of molten first resin parts 300 are sequentially applied through the needle ND into corresponding portions on the Y'-direction side of the plurality of positioning grooves 120. Note that, in the step of applying the plurality of first resin parts 300, the needle ND of the first application machine is not required to be placed at the positions on the second oblique direction side relative to the respective positioning grooves 120, but may be placed at any positions on the side in a direction including a component of the Z direction relative to the respective positioning grooves 120.

The first application machine stores settings of a predetermined application pressure (hereinafter referred to as "the first application pressure") and a predetermined application time (hereinafter referred to as "the first application time") so that the first portion 310, the third portion 330, and the second portion 320 of each of the molten first resin parts 300 fill the relief groove 130, the light reflecting groove 110, and each of positioning grooves 120, respectively, in one of manners described below. The first application machine measures the first application time with an internal timer circuit, or an internal software timer, or other means. When the first application machine determines that the first application time has elapsed, then it stops applying each of the molten first resin parts 300 into each of the positioning grooves 120.

The first application machine applies each of the molten first resin parts 300 into each of the positioning grooves 120 at the first application pressure for the first application time. The applied first resin parts 300 flow into the respective positioning grooves 120, the light reflecting groove 110, and the relief groove 130 in this order. The first portions 310 of the first resin parts 300 flow through the respective positioning grooves 120, or alternatively through the respective positioning grooves 120 and the light reflecting groove 110, and then into the relief groove 130. The first portions 310 of the first resin parts 300 are then adhere to each other to be integrated together and fill the relief groove 130 entirely or partly, or alternatively remain separated without adhering to each other and fill the relief groove 130 partly. The third portions 330 of the first resin parts 300 flow through the respective positioning grooves 120, and then into the light reflecting groove 110, and are arranged in the light reflecting groove 110. The second portions 320 of the first resin parts 300 fill the respective positioning grooves 120 and adhere to the respective fixable portions 220 of the optical fibers 200 and the respective walls 121 of the positioning grooves 120. Where the retainer 600 is provided, the second portions 320 of the plurality of first resin parts 300 having filled the plurality of positioning grooves 120 also adhere to the retainer 600. In other words, each of the molten first resin parts 300 includes a portion flowing into the relief groove 130 to form the first portion 310 of each first resin part 300, a portion flowing into the light reflecting groove 110 to form the third portion 330 of each first resin part 300, and a portion flowing into the corresponding positioning groove 120 to form the second portion 320 of each first resin part 300.

Thereafter, the plurality of applied first resin parts 300 are solidified by at least one of the following means: heating, irradiation of ultraviolet or other light, cooling, or drying. As a result, the first portions 310 of the plurality of first resin parts 300 are solidified in the entire relief groove 130 or in a part of the relief groove 130, the third portions 330 of the plurality of first resin parts 300 are solidified in the light reflecting groove 110, and the second portions 320 of the plurality of first resin parts 300 are solidified in the respective positioning grooves 120 to fix the fixable portions 220 of the plurality of optical fibers 200 to the respective walls 121 of the plurality of positioning grooves 120. Where the retainer 600 is provided, the second portions 320 of the plurality of first resin parts 300 are also fixed to the retainer 600.

After solidifying the plurality of first resin parts 300, the second resin part 400 in a molten state is applied into the light reflecting groove 110.

A second application machine (not illustrated) stores settings of an application pressure (hereinafter referred to as "the second application pressure") and a predetermined application time (hereinafter referred to as "the second application time") so that the molten second resin part 400 fills at least the relief groove 130 in one of manners described below. The second application machine measures the second application time with an internal timer circuit, or an internal software timer, or other means. When the second application machine determines that the second application time has elapsed, then it stops applying the molten second resin part 400 into the light reflecting groove 110.

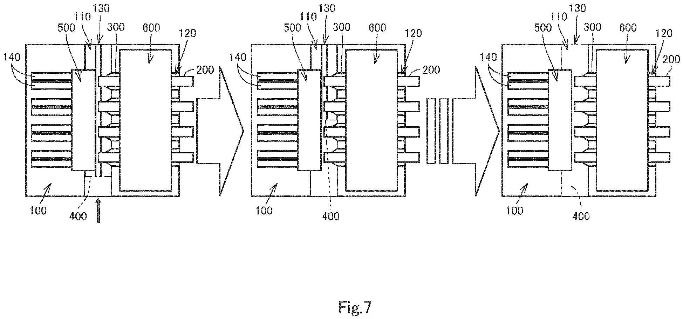

For example, as illustrated in Fig. 7, a needle of the second application machine is arranged at a position on the third oblique direction side relative to the light reflecting groove 110, the second application machine applies the molten second resin part 400 through the needle into the light reflecting groove 110 at the second application pressure for the second application time, so as to allow the second resin part 400 to flow from the X-direction side to the X'-direction side in the light reflecting groove 110 and to fill at least the light reflecting groove 110. Thus allowing the molten second resin part 400 to flow from the X-direction side to the X'-direction side in the light reflecting groove 110, the flowing second resin part 400 pushes air in the light reflecting groove 110 (including air existing on the Z'-direction side relative to the distal portions 210 of the plurality of optical fibers 200 and air existing on the Z' -direction side relative to the facing portion 510 of the optical device 500), from the X-direction side to the X'-direction side in the light reflecting groove 110, to the outside, and fill the light reflecting groove 110. Fig. 7 shows the second resin part 400 with two-dot chain lines for distinguishing the second resin part 400 from other elements.

Note that, in the step of applying the second resin part 400, the needle of the second application machine is not required to be arranged at the position on the third oblique direction side relative to the light reflecting groove 110, but may be arranged at any position on the side in a direction including a component of the Z direction relative to the light reflecting groove 110.

Where the first portions 310 of the plurality of first resin parts 300 are integrated together and fill the relief groove 130 entirely, the applied second resin part 400 fills the light reflecting groove 110 of the base 100 and adheres to the facing portion 510 of the optical device 500, the integrated first portions 310 of the plurality of first resin parts 300, the third portions 330 of the plurality of first resin parts 300, the mirror face 111 of the light reflecting groove 110, the opposite face 112 of the light reflecting groove 110, and the distal portions 210 of the plurality of optical fibers 200.

Where the first portions 310 of the plurality of first resin parts 300 are integrated together and fill the relief groove 130 partly, or where the first portions 310 of the plurality of first resin parts 300 are provided separately from each other and fill the relief groove 130 partly, the applied second resin part 400 fills not only the light reflecting groove 110 of the base 100 but also the remaining part of the relief groove 130, and adheres to the facing portion 510 of the optical device 500, the integrated or separate first portions 310 of the plurality of first resin parts 300, the third portions 330 of the plurality of first resin parts 300, the mirror face 111 of the light reflecting groove 110, the opposite face 112 of the light reflecting groove 110, and the distal portions 210 of the plurality of optical fibers 200.

The second resin part 400 may be applied such as to cover the optical device 500, applied such as to fill the space between the optical device 500 and the retainer 600 if the retainer 600 is provided, or applied in any other possible manner.

Thereafter, the applied second resin part 400 is solidified by at least one of the following means: heating, irradiation of ultraviolet or other light, cooling, or drying. As a result, the solidified second resin part 400 is fixed to the facing portion 510 of the optical device 500, the integrated, or separate, first portions 310 of the plurality of first resin parts 300, the third portions 330 of the plurality of first resin parts 300, the mirror face 111 of the light reflecting groove 110, the opposite face 112 of the light reflecting groove 110, and the distal portions 210 of the plurality of optical fibers 200.

The assembly A1 is thus manufactured.

Note that the method for manufacturing the assembly A1 described above can be modified as follows. The first application pressure and the first application time are set in the first application machine such that the molten first resin parts 300 flow into the respective positioning grooves 120, and portions of the first resin parts 300 are separated from the remaining portions that have filled the positioning grooves 120 and drop into the relief groove 130. In this case, the portions having dropped into the relief groove 130 respectively form the first portions 310 of the first resin parts 300, and the remaining portions respectively form the second portions 320 of the molten first resin parts 300. In this case, each of the first resin parts 300 is not provided with the third portion 330.

The first portions 310 of the plurality of first resin parts 300 having dropped into the relief groove 130 are separate portions filling the relief groove 130 partly. The plurality of first resin parts 300 are solidified, and then the molten second resin part 400 is applied into the light reflecting groove 110 of the base 100 in one of the manners described above. As a result, the molten second resin part 400 fills the light reflecting groove 110 of the base 100 and the remaining portion of the relief groove 130, and adheres to the facing portion 510 of the optical device 500, the separate first portions 310 of the plurality of first resin parts 300, the mirror face 111 of the light reflecting groove 110, the opposite face 112 of the light reflecting groove 110, and the distal portions 210 of the plurality of optical fibers 200. The second resin part 400 is then solidified as described above. Thus the assembly A1 is thus manufactured in which each of the first resin parts 300 does not include the third portion 330.

For the sake of comparison with the assembly A1, an optical fiber assembly AC of a comparative example (may be referred to simply as "assembly AC") will now be described.

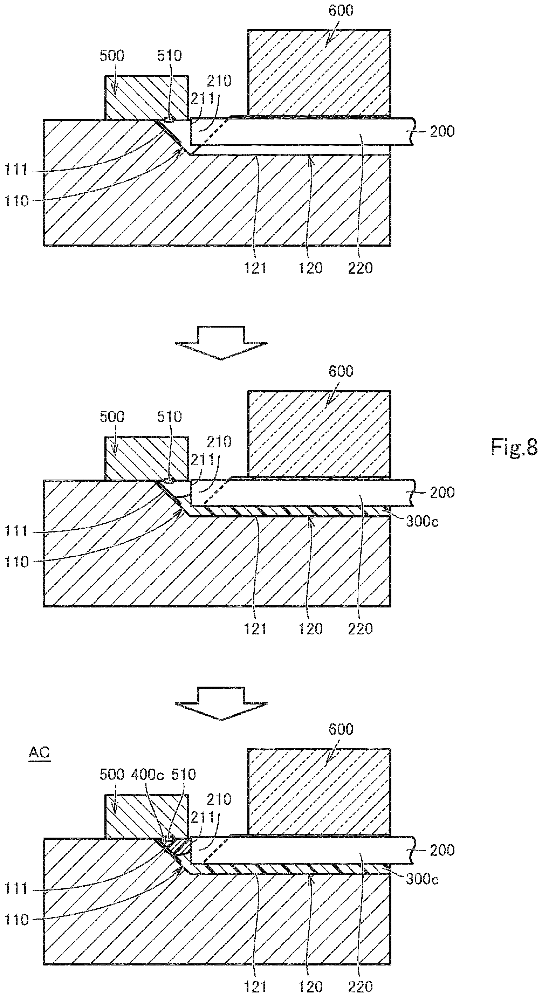

The assembly AC has a configuration similar to that of the assembly A1 but is different in that the base 100 is not provided with the relief groove 130, a plurality of first resin parts 300C fill the respective positioning grooves 120 and a part of the light reflecting groove 110 of the base 100, and a second resin part 400C fills the remaining portion of the light reflecting groove 110 (see the lowermost view of Fig. 8). The assembly AC thus configured is manufactured as described below.

In a method for manufacturing the assembly AC, similarly to the method for manufacturing the assembly A1, the base 100 is prepared, the plurality of optical fibers 200 are prepared, and the plurality of optical fibers 200 are arranged on the base 100 (see the uppermost view of Fig. 8). Where the assembly AC is provided with the retainer 600, after the plurality of optical fibers 200 are arranged on the base 100, the retainer 600 is placed on the first face 101 of the base 100 as described above, and the fixable portions 220 of the plurality of optical fibers 200 are thereby held between the retainer 600 and the base 100 (see the uppermost view of Fig. 8).

Thereafter, the plurality of first resin parts 300C in a molten state are applied through the needle ND of the first application machine into the respective positioning grooves 120 of the base 100. At this time, portions of the plurality of molten first resin parts 300C flow through the respective positioning grooves 120 and then into the light reflecting groove 110, build up in the light reflecting groove 110, and climb up in the Z direction in the light reflecting groove 110, along the distal faces 211 of the respective optical fibers 200 (see the middle view of Fig. 8). Accordingly, an interface exists between the climbed portion of each of the first resin parts 300C and at least a portion of each of the distal faces 211 of the plurality of optical fibers 200. Also, there is a possibility that air bubbles (not illustrated) may be trapped in each interface.

After the plurality of molten first resin parts 300C are solidified, the second resin part 400C is applied into the light reflecting groove 110 and solidified (see the lowermost view of Fig. 8). Then, the portions of the plurality of first resin parts 300C that are located in the light reflecting groove 110 covers, and are fixed to, at least respective portions of the distal faces 211 of the plurality of optical fibers 200, in the existence of the above-described interfaces. Since the plurality of first resin parts 300C have no translucency and/or have a refractive index different from that of the cores of the plurality of optical fibers 200, the plurality of first resin parts 300C differ from the cores of the plurality of optical fibers 200 in transmittance of optical signals. This difference causes diffusion and scattering of optical signals in the interfaces, resulting in light loss of the optical signals and poor optical characteristics of the assembly AC. In addition, where the assembly AC is arranged at high temperatures (for example, the assembly AC incorporated in a medical device may be heated to about 140°C by an autoclave or other sterilization device), if air bubbles are trapped in the interfaces, the air bubbles may expand to cause further light loss of the optical signals at the interfaces, or the expanded air bubbles may push and displace at least one of the plurality of optical fibers 200.

This is in contrast with the assembly A1, in which the base 100 is provided with the relief groove 130, the first portions 310 of the plurality of first resin parts 300 fill the relief groove 130 entirely or partly, and the second resin part 400 fills the light reflecting groove 110 on the Z-direction side relative to the relief groove 130 or fills the light reflecting groove 110 and the remaining part of the relief groove 130. Accordingly, in the method for manufacturing the assembly A1, when the plurality of molten first resin parts 300 are applied to the respective positioning grooves 120 of the base 100, the molten first portions 310 of the plurality of first resin parts 300 flow into the relief groove 130, reducing the possibly that portions of the plurality of molten first resin parts 300 build up in the light reflecting groove 110. It is therefore possible to prevent or reduce a phenomenon where the portions of the plurality of molten first resin parts 300 may climb up in the Z direction along the respective distal faces 211 of the plurality of optical fibers 200. In other words, the assembly A1 is less likely to have interfaces per se between the distal faces 211 of the plurality of optical fibers 200 and the first portions 310 of the plurality of molten first resin parts 300.

The assembly A1 and the manufacturing method therefor described above provides technical features and effects (1) to (4) as follows.

Technical Feature and Effect (1): It is possible to apply the second resin part 400 having translucency at least into the light reflecting groove 110 of the base 100 after fixing the fixable portion 220 of at least one optical fiber 200 to the at least one positioning groove 120 of the base 100 with the at least one first resin part 300. This reduces a risk that the at least one optical fiber 200 may move when the second resin part 400 is applied. Where the retainer 600 is provided, the retainer 600 retains the fixable portion 220 of the at least one optical fiber 200, further reducing the risk of movement of the at least one optical fiber 200.

Technical Feature and Effect (2): The assembly A1 is configured such that the base 100 is provided with the relief groove 130, and that the first portion 310 of the at least one first resin part 300 fill the relief groove 130 at least partly. In the method for manufacturing the assembly A1, when the at least one first resin part 300 in a molten state is applied into the at least one positioning groove 120 of the base 100, the molten first portion 310 of the at least one first resin part 300 flow into the relief groove 130. Therefore, in contrast to the optical fiber assembly AC of the comparative example, the assembly A1 and the manufacturing method therefor prevent or reduce the phenomenon where a portion of the at least one first resin part 300 may build up in the light reflecting groove 110 and climb up in the Z direction along the distal face 211 of the at least one optical fiber 200, and therefore an interface is less likely to exist between the at least one first resin part 300 and the distal face 211 of the at least one optical fiber 200. As a result, in the assembly A1 and the manufacturing method therefor, light loss of optical signals due to air bubbles trapped in the interface is less likely to occur. Therefore, as compared with the assembly AC, the assembly A1 is improved in optical characteristics. In addition, since the interfaces per se are less likely to exist in the assembly A1 and the manufacturing method therefor, the assembly A1 is suitable for arrangement at higher temperatures.

Technical Feature and Effect (3): A possible approach for preventing the above-described climbing-up phenomenon of the at least one first resin part would be to apply the at least one first resin part into the at least one positioning groove 120 after filling and solidifying the second resin part in the light reflecting groove 110. This approach would cause the solidified second resin part to block the Y-direction side of the at least one positioning groove 120. Therefore, the application of the at least one first resin part into the at least one positioning groove 120 may cause entrapment of air bubbles in a region on the Y-direction side relative to the at least one positioning groove 120, particularly in an interface between the at least one first resin part and the fixable portion 220 of the at least one optical fiber 200 or an interface between the at least one first resin part and the second resin part. In contrast, the assembly A1 is configured such that the first portion 310 of the at least one first resin part 300 fill the relief groove 130 entirely or partly, and that the second resin part 400 fills the light reflecting groove 110 located on the Z-direction side relative to the relief groove 130. This configuration makes it possible in the method for manufacturing the assembly A1 to apply the at least one molten first resin part 300 into the at least one positioning groove 120 before applying the second resin part 400. The manufacturing method therefore prevents or reduces the entrapment of air bubbles in the at least one positioning groove 120, particularly in an interface between the at least one first resin part 300 and the fixable portion 220 of the at least one optical fiber 200.

Technical Feature and Effect (4): In the method for manufacturing the assembly A1, where the application of the second resin part 400 into the light reflecting groove 110 includes flowing the second resin part 400 in a molten state from the X-direction side to the X'-direction side into the light reflecting groove 110, the flowing second resin part 400 fills the light reflecting groove 110 while advantageously pushing out air in the light reflecting groove 110, from the X-direction side to the X'-direction side in the light reflecting groove 110. The manufacturing method therefore prevents or reduces the entrapment of air bubbles in the at least one positioning groove 120, particularly in the interface between the distal portion 210 of the at least one optical fiber 200 and the flowing second resin part 400 (e.g., the interface between the face on the Z'-direction side of the distal portion 210 of the optical fiber 200 and the flowing second resin part 400), and/or in the interface between the optical device 500 and the flowing second resin part 400 (e.g., the interface between the facing portion 510 of the optical device 500 and the flowing second resin part 400). Where the light reflecting groove 110 extends through the base 100 in the X-X' direction, this configuration makes it easier to flow the molten second resin part 400 from the X-direction side to the X'-direction side in the light reflecting groove 110.

### Second Embodiment

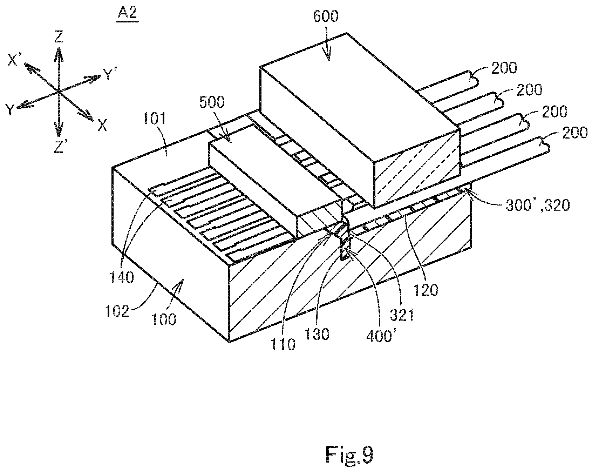

An optical fiber assembly A2 (which may be referred to simply as "assembly A2") according to a plurality of embodiments, including the second embodiment of the invention and variants thereof, will now be described with reference to Fig. 9. Fig. 9 illustrates the optical fiber assembly A2 of the second embodiment. The optical fiber assembly A2 has a configuration similar to that of the optical fiber assembly A1 described above, but different in that at least one first resin part 300' includes the second portion 320, but neither the first portion 310 nor the third portion 330, and that a second resin part 400' fills not only the light reflecting groove 110 of the base 100 but also the relief groove 130. The following descriptions focus on the differences with overlapping descriptions omitted. Note that Fig. 9 shows the Z-Z' direction, the Y-Y' direction, and the X-X' direction as with Fig. 1.

Similarly to the at least one first resin part 300 of the assembly A1, the at least one first resin part 300' of the assembly A2 may be a single first resin part or a plurality of first resin parts, corresponding the number of the at least one positioning grooves 120 of the base 100.

For convenience of description, the at least one first resin part 300' will also be described as a plurality of first resin parts corresponding the number of the plurality of positioning grooves 120. However, even in a case where a single first resin part 300' is provided, the first resin part 300' may be configured similarly to each of the first resin parts 300'.

The second portions 320 of the plurality of first resin parts 300' fill the respective positioning grooves 120 of the base 100, up to respective gaps between the plurality of edges EG of the base 100 and the corresponding fixable portions 220 of the plurality of optical fibers 200. The second portions 320 of the plurality of first resin parts 300' respectively fix the fixable portions 220 of the plurality of optical fibers 200 to the respective walls 121 of the plurality of positioning grooves 120.

Where the retainer 600 is provided, the second portions 320 of the plurality of first resin parts 300' are respectively fixed not only to the fixable portions 220 of the plurality of optical fibers 200 and the walls 121 of the plurality of positioning grooves 120 but also to the retainer 600.

The second portions 320 of the plurality of first resin parts 300' each have a distal face 321 on the Y-direction side. The distal faces 321 face the inside of the light reflecting groove 110, through the respective gaps between the plurality of edges EG and the fixable portions 220 of the plurality of optical fibers 200.

The plurality of positioning groove 120 may each have, for example, a generally V-shape (see Fig. 3B), an inverted trapezoidal shape (see Fig. 4A), a generally U-shape (see Fig. 4B), or a generally square U-shape (see Fig. 4C), or the like shape, in the first cross-sectional view.

The second resin part 400' fills the light reflecting groove 110 and the relief groove 130 of the base 100, and is fixed to the facing portion 510 of the optical device 500, the distal faces 321 of the second portions 320 of the plurality of first resin parts 300', the mirror face 111 of the light reflecting groove 110, the opposite face 112 of the light reflecting groove 110, and the distal portions 210 of the plurality of optical fibers 200.

The second resin part 400' may, but is not required to, cover the optical device 500.

Where the retainer 600 is provided, the second resin part 400' may, but is not required to, fill the space between the optical device 500 and the retainer 600 to be fixed to the optical device 500 and the retainer 600.

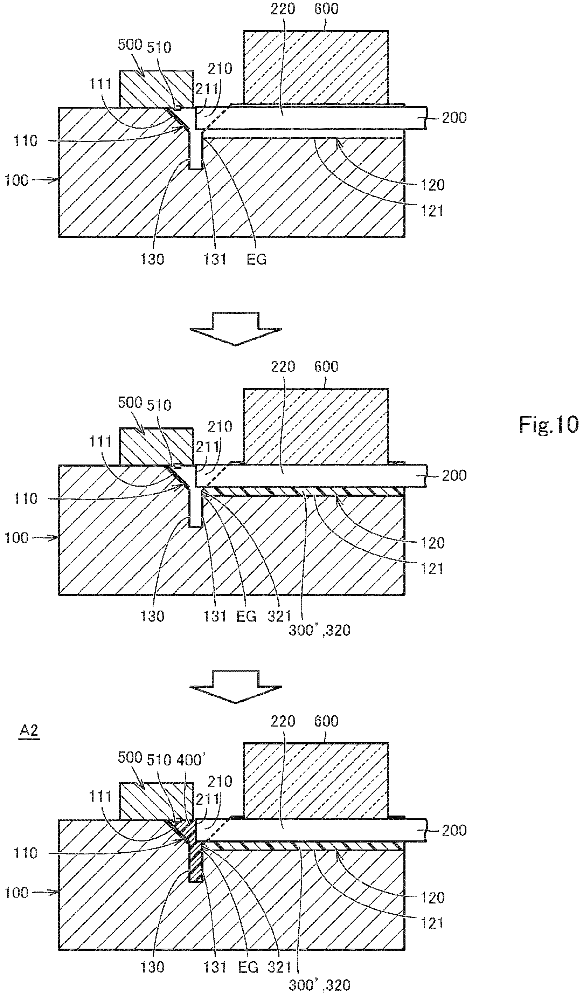

A method for manufacturing the assembly A2 will now be described with reference to Fig. 10. The method to be described concerns the assembly A2 in which the at least one optical fibers 200, the at least one positioning groove 120 of the base 100, and the at least one first resin part 300' are provided as the plurality of optical fibers 200, the plurality of positioning grooves 120, and the plurality of first resin parts 300'. However, the method to be described is applicable to the assembly A2 in which the at least one optical fibers 200, the at least one positioning groove 120 of the base 100, and the at least one first resin part 300' are provided as the single optical fiber 200, the single positioning groove 120, and the single first resin part 300'.

In the method for manufacturing the assembly A2, similarly to the method for manufacturing the assembly A1, the base 100 is prepared, the plurality of optical fibers 200 are prepared, and the plurality of optical fibers 200 are arranged on the base 100. Where the retainer 600 is to be provided, after arranging the plurality of optical fibers 200 on the base 100, the retainer 600 is placed on the first face 101 of the base 100 as described above, so that the fixable portions 220 of the plurality of optical fibers 200 are held between the retainer 600 and the base 100.

After arranging the plurality of optical fibers 200 on the base 100, or alternatively after placing the retainer 600 on the base 100 (only where the retainer 600 is provided), the plurality of first resin parts 300' in a molten state are applied through the needle ND of the first application machine into the respective positioning grooves 120 of the base 100.

For example, the needle ND is sequentially placed from one position after another on the second oblique direction side relative to the corresponding positioning grooves 120 (see Fig. 6), and the plurality of molten first resin parts 300' are sequentially applied through the needle ND into corresponding portions on the Y'-direction side of the plurality of positioning grooves 120. Note that, in the step of applying the plurality of first resin parts 300', the needle ND of the first application machine is not required to be placed at the positions on the second oblique direction side relative to the respective positioning grooves 120, but may be placed at any positions on the side in a direction including a component of the Z direction relative to the respective positioning grooves 120.

The first application machine stores settings of a predetermined application pressure (hereinafter referred to as "the third application pressure") and a predetermined application time (hereinafter referred to as "the third application time") so that each of the molten first resin parts 300' fill each of the positioning grooves 120 in one of manners described below. The first application machine measures the third application time with an internal timer circuit, or an internal software timer, or other means. When the first application machine determines that the third application time has elapsed, then it stops applying each of the molten first resin parts 300' into each of the positioning grooves 120.

As a result of the first application machine applying each of the molten first resin parts 300' into each of the positioning grooves 120 at the third application pressure for the third application time, the second portion 320 of each of the applied first resin parts 300' flow into each of the positioning grooves 120 and fill each of the positioning grooves 120 up to each of the gaps between each of the plurality of edges EG of the base 100 and each of the fixable portions 220 of the plurality of optical fibers 200. In other words, as a result of the first application machine applying each of the molten first resin parts 300' into each of the positioning grooves 120 at the third application pressure for the third application time, each of the second portions 320 of the first resin parts 300' flowing into each of the positioning grooves 120 stop at each of the gaps between each of the edges EG of the base 100 and each of the fixable portions 220 of the plurality of optical fibers 200.

Where the first resin parts 300' in a molten state have a predetermined viscosity (the viscosity is equal to 0.4 Pa·s or larger (preferably the viscosity is 0.4 to 0.8 Pa·s)) and the first application machine applies each of the molten first resin parts 300' into each of the positioning grooves 120 at the third application pressure for the third application time, each of the second portions 320 of the first resin parts 300' flowing into each of the positioning grooves 120 is more likely to stop at each of the gaps between each of the edges EG of the base 100 and each of the fixable portions 220 of the plurality of optical fibers 200.

The second portions 320 of the first resin parts 300' fill the respective positioning grooves 120 and adhere to the respective fixable portions 220 of the optical fibers 200 and the respective walls 121 of the positioning grooves 120. The distal faces 321 of the second portions 320 of the first resin parts 300' are arranged to face the light reflecting groove 110 through the respective positioning grooves 120.

Where the retainer 600 is provided, the second portions 320 of the plurality of first resin parts 300' having filled the respective positioning grooves 120 also adhere to the retainer 600.

Thereafter, the plurality of applied first resin parts 300' are solidified by at least one of the following means: heating, irradiation of ultraviolet or other light, cooling, or drying. As a result, the second portions 320 of the plurality of first resin parts 300' are solidified in the respective positioning grooves 120 to fix the fixable portions 220 of the plurality of optical fibers 200 to the respective walls 121 of the plurality of positioning grooves 120. Where the retainer 600 is provided, the second portions 320 of the plurality of first resin parts 300' are also fixed to the retainer 600.

After solidifying the plurality of first resin parts 300', the second resin part 400' in a molten state is applied into the light reflecting groove 110 and/or the relief groove 130.

The second application machine stores settings of an application pressure (hereinafter referred to as "the fourth application pressure") and a predetermined application time (hereinafter referred to as "the fourth application time") so that the molten second resin part 400' fills the relief groove 130 and the light reflecting groove 110 in one of manners described below. The second application machine measures the fourth application time with an internal timer circuit, or an internal software timer, or other means. When the second application machine determines that the fourth application time has elapsed, then it stops applying the molten second resin part 400' into the light reflecting groove 110 and/or the relief groove 130.

For example, the needle of the second application machine is arranged at a position on the third oblique direction side relative to the light reflecting groove 110 (see Fig. 7), the second application machine applies the molten second resin part 400' through the needle into the light reflecting groove 110 at the fourth application pressure for the fourth application time, so as to allow the second resin part 400' to flow from the X-direction side to the X'-direction side in the light reflecting groove 110 and the relief groove 130 and to fill the light reflecting groove 110 and the relief groove 130. Thus allowing the molten second resin part 400' to flow from the X-direction side to the X'-direction side in the light reflecting groove 110 and the relief groove 130, the flowing second resin part 400 pushes air in the light reflecting groove 110 and the relief groove 130 (including air existing on the Z'-direction side relative to the distal portions 210 of the plurality of optical fibers 200 and air existing on the Z' -direction side relative to the facing portion 510 of the optical device 500), from the X-direction side to the X'-direction side in the light reflecting groove 110 and the relief groove 130, to the outside, and fill the light reflecting groove 110 and the relief groove 130.

Note that, in the step of applying the second resin part 400', the needle of the second application machine is not required to be arranged at the position on the third oblique direction side relative to the light reflecting groove 110, but may be arranged at any position on the side in a direction including a component of the Z direction relative to the light reflecting groove 110, or alternatively on the side in a direction including a component of the X or X' direction relative to the relief groove 130.

The applied second resin part 400' fills the light reflecting groove 110 and the relief groove 130 of the base 100, and adheres to the facing portion 510 of the optical device 500, the distal faces 321 of the second portions 320 of the plurality of first resin parts 300', the mirror face 111 of the light reflecting groove 110, the opposite face 112 of the light reflecting groove 110, and the distal portions 210 of the plurality of optical fibers 200.

The second resin part 400' may be applied such as to cover the optical device 500, applied such as to fill the space between the optical device 500 and the retainer 600 if the retainer 600 is provided, or applied in any other possible manner.

Thereafter, the applied second resin part 400' is solidified by at least one of the following means: heating, irradiation of ultraviolet or other light, cooling, or drying. As a result, the solidified second resin part 400' is fixed to the facing portion 510 of the optical device 500, the distal faces 321 of the second portions 320 of the plurality of first resin parts 300', the mirror face 111 of the light reflecting groove 110, the opposite face 112 of the light reflecting groove 110, and the distal portions 210 of the plurality of optical fibers 200.

The assembly A2 is thus manufactured.

The assembly A2 and the manufacturing method therefor described above provides technical features and effects (1) to (4) as follows.

Technical Feature and Effect (1): It is possible to apply the second resin part 400' having translucency at least into the light reflecting groove 110 and the relief groove 130 of the base 100 after fixing the fixable portion 220 of at least one optical fiber 200 to the at least one positioning groove 120 of the base 100 with the at least one first resin part 300'. This reduces a risk that the at least one optical fiber 200 may move when the second resin part 400' is applied. Where the retainer 600 is provided, the retainer 600 retains the fixable portion 220 of the at least one optical fiber 200, further reducing the risk of movement of the at least one optical fiber 200.

Technical Feature and Effect (2): The assembly A2 is configured such that the base 100 is provided with the relief groove 130, and that the second resin part 400' fills the light reflecting groove 110 and the relief groove 130. In the method for manufacturing the assembly A2, the at least one first resin part 300' in a molten state is applied into the at least one positioning groove 120 of the base 100 and is made to fill the at least one positioning grooves 120 of the base 100, up to the gap between the at least one edge EG of the base 100 and the fixable portion 220 of the at least one optical fiber 200. Thereafter, the second resin part 400' in a molten state is applied into the light reflecting groove 110 and/or the relief groove 130 to fill the light reflecting groove 110 and the relief groove 130. Therefore, in contrast to the optical fiber assembly AC of the comparative example, the assembly A2 and the manufacturing method therefor prevent or reduce the phenomenon where a portion of the at least one first resin part 300' may build up in the light reflecting groove 110 and climb up in the Z direction along the distal face 211 of the at least one optical fiber 200, and therefore an interface is less likely to exist between the at least one first resin part 300' and the distal face 211 of the at least one optical fiber 200. As a result, in the assembly A2 and the manufacturing method therefor, light loss of optical signals due to air bubbles trapped in the interface is less likely to occur. Therefore, as compared with the assembly AC, the assembly A2 is improved in optical characteristics. In addition, since the interfaces per se are less likely to exist in the assembly A2 and the manufacturing method therefor, the assembly A2 is suitable for arrangement at higher temperatures.

Technical Feature and Effect (3): A possible approach for preventing the above-described climbing-up phenomenon of the at least one first resin part would be to apply the at least one first resin part into the at least one positioning groove 120 after filling and solidifying the second resin part in the light reflecting groove 110. This approach would cause the solidified second resin part to block the Y-direction side of the at least one positioning groove 120. Therefore, the application of the at least one first resin part into the at least one positioning groove 120 may cause entrapment of air bubbles in a region on the Y-direction side relative to the at least one positioning groove 120, particularly in an interface between the at least one first resin part and the fixable portion 220 of the at least one optical fiber 200 or an interface between the at least one first resin part and the second resin part. In contrast, the assembly A2 is configured such that the at least one first resin part 300' fills the at least one positioning groove 120, and that the second resin part 400' fills the light reflecting groove 110. This configuration makes it possible in the method for manufacturing the assembly A2 to apply the at least one molten first resin part 300' into the at least one positioning groove 120 before applying the second resin part 400'. The manufacturing method therefore prevents or reduces the entrapment of air bubbles in the at least one positioning groove 120, particularly in an interface between the at least one first resin part 300' and the fixable portion 220 of the at least one optical fiber 200 or in an interface between the at least one first resin part 300' and the second resin part 400'.

Technical Feature and Effect (4): In the method for manufacturing the assembly A2, where the application of the second resin part 400' into the light reflecting groove 110 and/or the relief groove 130 includes flowing the second resin part 400' in a molten state from the X-direction side to the X'-direction side into the light reflecting groove 110 and the relief groove 130, the flowing second resin part 400' fills the light reflecting groove 110 and the relief groove 130 while advantageously pushing out air in the light reflecting groove 110 and the relief groove 130, from the X-direction side to the X'-direction side in the light reflecting groove 110 and the relief groove 130. The manufacturing method therefore prevents or reduces the entrapment of air bubbles in the at least one positioning groove 120, particularly in the interface between the distal portion 210 of the at least one of optical fiber 200 and the flowing second resin part 400' (e.g., the interface between the face on the Z'-direction side of the distal portion 210 of the at least one of optical fiber 200 and the flowing second resin part 400'), and/or in the interface between the optical device 500 and the flowing second resin part 400' (e.g., the interface between the facing portion 510 of the optical device 500 and the flowing second resin part 400'). Where the light reflecting groove 110 and the relief groove 130 extend through the base 100 in the X-X' direction, this configuration makes it easier to flow the molten second resin part 400' from the X-direction side to the X'-direction side in the light reflecting groove 110.

It should be noted that the optical fiber assemblies and the manufacturing methods therefor described above are not limited to the embodiments described above, but may be modified as appropriate within the scope of the claims. Some examples of modification will now be described.

The optical device 500 and the plurality of connection lines 140 of the assembly A1 can be omitted. In this case, the second resin part 400 of the assembly A1 is not fixed to the facing portion 510 of the optical device 500. Accordingly, in the method for manufacturing the assembly A1, when the second resin part 400 in a molten state fills at least the light reflecting groove 110, the molten second resin part 400 does not adhere to the facing portion 510 of the optical device 500.

The optical device 500 and the plurality of connection lines 140 of the assembly A2 can also be omitted. In this case, the second resin part 400' of the assembly A2 is not fixed to the facing portion 510 of the optical device 500. Accordingly, in the method for manufacturing the assembly A2, when the second resin part 400' in a molten state fills the light reflecting groove 110 and the relief groove 130, the molten second resin part 400' does not adhere to the facing portion 510 of the optical device 500.

The above-described shapes in the cross-sectional view of the at least one positioning groove 120 of the base 100 of each of the assembly A1 and the assembly A2 can be changed to any other shape suitable for receiving the fixable portion 220 of the at least one optical fiber 200.

Where the at least one positioning grooves 120, the at least one optical fiber 200, and the at least one first resin part of each of the assembly A1 and the assembly A2 are a single positioning groove, a single optical fiber, and a single first resin part, respectively, they may be configured as follows. The light reflecting groove 110 and the relief groove 130 are not required to be elongated grooves extending in the X-X' direction, but only required to each have a dimension in the X-X' direction that is larger than that of the single positioning groove 120. The portion where the wall 121 of the single positioning groove 120 meets the wall 131 of the relief groove 130 forms a single edge EG. The single edge EG may have the same configuration as each of the edges EG described above. Where the optical device 500 is provided, the optical device 500 includes a single opto-electronic or electro-optical converter to be optically connected to the single optical fiber 200 via the mirror face 111 of the light reflecting groove 110. The first portion 310 of the single first resin part 300 may fill the relief groove 130 entirely or partly.

### Reference Signs List

A1, A2: optical fiber assembly
   100: base
   101: first face; 102: second face; 110: light reflecting groove; 111: mirror face;
112: opposite face; 120: positioning groove; 121: wall; 130: relief groove; 131: wall; EG: edge;
140: connection line
   200: optical fiber
      210: distal portion; 211: distal face; 220: fixable portion
   300, 300': first resin part
      310: first portion; 320: second portion; 321: distal face; 330: third portion
   400, 400': second resin part
   500: optical device
      510: facing portion
   600: retainer

The disclosure of this application also includes the following clauses numbered 1 through 19:
Clause 1. A method for manufacturing an optical fiber assembly (A1), the method comprising:
   preparing a base (100);
   preparing at least one optical fiber (200);
   arranging the at least one optical fiber (200) on the base (100);
   applying at least one first resin part (300);
   solidifying the applied at least one first resin part (300);
   applying a second resin part (400) having translucency, and having a refractive index substantially equal to a refractive index of a core of the at least one optical fiber (200) and/or having a refractive index of approximately 1.4 to approximately 1.6; and
   solidifying the applied second resin part (400), wherein
   the base (100) includes a first face (101) with a light reflecting groove (110), at least one positioning groove (120), and a relief groove (130), the first face (101) is a face of the base (100) on one side (Z) in a first direction (Z-Z'), and the first direction (Z-Z') is a thickness direction of the base (100),
   the light reflecting groove (110) is a groove opening to the one side (Z) in the first direction (Z-Z') and includes a mirror face (111) on one side (Y) in a second direction (Y-Y') and an opposite face (112) facing the mirror face (111), the second direction (Y-Y') being substantially orthogonal to the first direction (Z-Z'),
   the at least one positioning groove (120) is at least one elongated groove extending from the light reflecting groove (110) to the other side (Y') in the second direction (Y-Y'), opening to the one side (Z) in the first direction (Z-Z'), and communicating with the light reflecting groove (110),
   the relief groove (130) is a close-bottomed hole extending from the light reflecting groove (110) to the other side (Z') in the first direction (Z-Z'),
   the relief groove (130) communicates with the light reflecting groove (110) and the at least one positioning groove (120), or alternatively communicates with the light reflecting groove (110) and communicates with the at least one positioning groove (120) via the light reflecting groove (110),
   the at least one optical fiber (200) includes a distal portion (210) on the one side (Y) in the second direction (Y-Y') and a fixable portion (220) on the other side (Y') in the second direction (Y-Y') relative to the distal portion (210), and the distal portion (210) of the at least one optical fiber (200) includes a distal face (211) on the one side (Y) in the second direction (Y-Y') of the at least one optical fiber (200), and
   the arranging of the at least one optical fiber (200) on the base (100) includes arranging the fixable portion (220) of the at least one optical fiber (200) into the at least one positioning groove (120) and arranging the distal portion (210) of the at least one optical fiber (200) into the light reflecting groove (110) such that the distal face (211) of the at least one optical fiber (200) faces the mirror face (111) of the light reflecting groove (110),
   the applying of the at least one first resin part (300) includes, after the arranging of the at least one optical fiber (200) on the base (100), applying the at least one first resin part (300) in a molten state into the at least one positioning groove (120), allowing a first portion (310) of the at least one applied first resin part (300) to flow through the at least one positioning groove (120), or alternatively through the at least one positioning groove (120) and the light reflecting groove (110), and then into the relief groove (130), and allowing a second portion (320) of the at least one applied first resin part (300) to flow into the at least one positioning groove (120) and to adhere to the fixable portion (220) of the at least one optical fiber (200) and a wall (121) of the at least one positioning groove (120),
   the solidifying of the at least one first resin part (300) includes solidifying the first portion (310) of the at least one first resin part (300) in the relief groove (130) and solidifying the second portion (320) of the at least one first resin part (300) in the at least one positioning groove (120) to fix the fixable portion (220) of the at least one optical fiber (200) to the wall (121) of the at least one positioning groove (120), and
   the applying of the second resin part (400) includes, after the solidifying of the at least one first resin part (300), applying the second resin part (400) in a molten state into the light reflecting groove (110) so that the second resin part (400) fills at least the light reflecting groove (110) and adheres to the first portion (310) of the at least one solidified first resin part (300), the mirror face (111) of the light reflecting groove (110), the opposite face (112) of the light reflecting groove (110), and the distal portion (210) of the at least one optical fiber (200).
Clause 2. The method according to clause 1, wherein
   the applying of the at least one first resin part (300) further includes allowing the at least one molten first resin part (300) to flow into the at least one positioning groove (120), the light reflecting groove (110), and the relief groove (130) in this order, wherein a portion of the at least one first resin part (300) that has flowed into the at least one positioning groove (120) forms the second portion (320) of the at least one first resin part (300), a portion of the at least one first resin part (300) that has flowed into the light reflecting groove (110) forms a third portion (330) of the at least one first resin part (300), and a portion of the at least one first resin part (300) that has flowed into the relief groove (130) forms the first portion (310) of the at least one first resin part (300), and
   the solidifying of the at least one first resin part (300) further includes solidifying the third portion (330) of the at least one first resin part (300) in the light reflecting groove (110).
Clause 3. The method according to clause 1 or 2, wherein
   the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
   the light reflecting groove (110) of the base (100) extends in the third direction (X-X') and communicates with the plurality of positioning grooves (120),
   the relief groove (130) of the base (100) extends in the third direction (X-X'),
   the relief groove (130) of the base (100) communicates with the light reflecting groove (110) and the plurality of positioning grooves (120), or alternatively communicates with the light reflecting groove (110) and communicates with the plurality of positioning grooves (120) via the light reflecting groove (110),
   the at least one optical fiber (200) comprises a plurality of optical fibers (200),
   the arranging of the at least one optical fiber (200) on the base (100) includes arranging the fixable portions (220) of the plurality of optical fibers (200) into the respective positioning grooves (120) and arranging the distal portions (210) of the plurality of optical fibers (200) into the light reflecting groove (110) such that the distal faces (211) of the plurality of optical fibers (200) oppose the mirror face (111) of the light reflecting groove (110),
   the applying of the at least one first resin part (300) includes, after the arranging of the plurality of optical fibers (200) on the base (100), applying a plurality of the first resin parts (300) in a molten state into the respective positioning grooves (120), allowing the first portions (310) of the plurality of applied first resin parts (300) to flow through the respective positioning grooves (120), or alternatively through the respective positioning grooves (120) and the light reflecting groove (110), and then into the relief groove (130), and allowing the second portions (320) of the plurality of applied first resin parts (300) to flow into the respective positioning grooves (120) and to adhere to the respective fixable portions (220) of the plurality of optical fibers (200) and the respective walls (121) of the plurality of positioning grooves (120),
   the solidifying of the at least one first resin part (300) includes solidifying the first portions (310) of the plurality of first resin parts (300) in the relief groove (130) and solidifying the second portions (320) of the plurality of first resin parts (300) in the respective positioning grooves (120) to fix the fixable portions (220) of the plurality of optical fibers (200) to the respective walls (121) of the plurality of positioning grooves (120), and
   the applying of the second resin part (400) includes allowing the second resin part (400) having filled at least the light reflecting groove (110) to adhere to the first portions (310) of the plurality of solidified first resin parts (300), the mirror face (111) of the light reflecting groove (110), the opposite face (112) of the light reflecting groove (110), and the distal portions (210) of the plurality of optical fibers (200).
Clause 4. The method according to clause 3, wherein the applying of the plurality of first resin parts (300) further includes allowing the first portions (310) of the plurality of first resin parts (300), which have flowed into the relief groove (130), to be integrated together in the relief groove (130).
Clause 5. The method according to any one of the preceding clauses, wherein the applying of the second resin part (400) further includes allowing the applied second resin part (400) to flow in the light reflecting groove (110), from one side (X) in the third direction (X-X') to the other side (X') in the third direction (X-X'), and to fill at least the light reflecting groove (110).
Clause 6. A method for manufacturing an optical fiber assembly (A2), the method comprising:
   preparing a base (100);
   preparing at least one optical fiber (200);
   arranging the at least one optical fiber (200) on the base (100);
   applying at least one first resin part (300');
   solidifying the applied at least one first resin part (300');
   applying a second resin part (400') having translucency, and having a refractive index substantially equal to a refractive index of a core of the at least one optical fiber (200) and/or having a refractive index of approximately 1.4 to approximately 1.6; and
   solidifying the applied second resin part (400'), wherein
   the base (100) includes a first face (101) with a light reflecting groove (110), at least one positioning groove (120), and a relief groove (130), the first face (101) is a face of the base (100) on one side (Z) in a first direction (Z-Z'), and the first direction (Z-Z') is a thickness direction of the base (100),
   the light reflecting groove (110) is a groove opening to the one side (Z) in the first direction (Z-Z') and includes a mirror face (111) on one side (Y) in a second direction (Y-Y') and an opposite face (112) facing the mirror face (111), the second direction (Y-Y') being substantially orthogonal to the first direction (Z-Z'),
   the at least one positioning groove (120) is at least one elongated groove extending from the light reflecting groove (110) to the other side (Y') in the second direction (Y-Y'), opening to the one side (Z) in the first direction (Z-Z'), and communicating with the light reflecting groove (110),
   the relief groove (130) is a close-bottomed hole extending from the light reflecting groove (110) to the other side (Z') in the first direction (Z-Z') and communicates with the light reflecting groove (110) and the at least one positioning groove (120),
   the at least one optical fiber (200) includes a distal portion (210) on the one side (Y) in the second direction (Y-Y') and a fixable portion (220) on the other side (Y') in the second direction (Y-Y') relative to the distal portion (210), and the distal portion (210) of the at least one optical fiber (200) includes a distal face (211) on the one side (Y) in the second direction (Y-Y') of the at least one optical fiber (200), and
   the arranging of the at least one optical fiber (200) on the base (100) includes arranging the fixable portion (220) of the at least one optical fiber (200) into the at least one positioning groove (120) and arranging the distal portion (210) of the at least one optical fiber (200) into the light reflecting groove (110) such that the distal face (211) of the at least one optical fiber (200) faces the mirror face (111) of the light reflecting groove (110),
   the applying of the at least one first resin part (300') includes, after the arranging of the at least one optical fiber (200) on the base (100), applying the at least one first resin part (300') in a molten state into the at least one positioning groove (120), and allowing the at least one applied first resin part (300') to adhere to the fixable portion (220) of the at least one optical fiber (200) and a wall (121) of the at least one positioning groove (120),
   the solidifying of the at least one first resin part (300') includes solidifying the at least one first resin part (300') in the at least one positioning groove (120) to fix the fixable portion (220) of the at least one optical fiber (200) to the wall (121) of the at least one positioning groove (120), and
   the applying of the second resin part (400') includes, after the solidifying of the at least one first resin part (300'), applying the second resin part (400') in a molten state into the light reflecting groove (110) and/or the relief groove (130) so that the second resin part (400') fills the light reflecting groove (110) and the relief groove (130) and adheres to the at least one first resin part (300'), the mirror face (111) of the light reflecting groove (110), the opposite face (112) of the light reflecting groove (110), and the distal portion (210) of the at least one optical fiber (200).
Clause 7. The method according to clause 6, wherein
   the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
   the light reflecting groove (110) of the base (100) extends in the third direction (X-X') and communicates with the plurality of positioning grooves (120),
   the relief groove (130) of the base (100) extends in the third direction (X-X') and communicates with the light reflecting groove (110) and the plurality of positioning grooves (120),
   the at least one optical fiber (200) comprises a plurality of optical fibers (200),
   the arranging of the at least one optical fiber (200) on the base (100) includes arranging the fixable portions (220) of the plurality of optical fibers (200) into the respective positioning grooves (120) and arranging the distal portions (210) of the plurality of optical fibers (200) into the light reflecting groove (110) such that the distal faces (211) of the plurality of optical fibers (200) oppose the mirror face (111) of the light reflecting groove (110),
   the applying of the at least one first resin part (300') includes, after the arranging of the plurality of optical fibers (200) on the base (100), applying a plurality of the first resin parts (300') in a molten state into the respective positioning grooves (120), and allowing the plurality of first resin parts (300') to adhere to the respective fixable portions (220) of the plurality of optical fibers (200) and the respective walls (121) of the plurality of positioning grooves (120),
   the solidifying of the at least one first resin part (300') includes solidifying the plurality of first resin parts (300') in the respective positioning grooves (120) to fix the fixable portions (220) of the plurality of optical fibers (200) to the respective walls (121) of the plurality of positioning grooves (120), and
   the applying of the second resin part (400') includes allowing the second resin part (400') having filled the light reflecting groove (110) and the relief groove (130) to adhere to the plurality of first resin parts (300'), the mirror face (111) of the light reflecting groove (110), the opposite face (112) of the light reflecting groove (110), and the distal portions (210) of the plurality of optical fibers (200).
Clause 8. The method according to clause 6 or 7, wherein
   a wall (131) on the other side (Y') in the second direction (Y-Y') of the relief groove (130) meets the wall (121) of the at least one positioning groove (120), and at least one portion where the wall (131) of the relief groove (130) meets the wall (121) of the at least one positioning groove (120) forms at least one edge (EG),
   the arranging of the fixable portion (220) of the at least one optical fiber (200) in the at least one positioning groove (120) further includes arranging the at least one optical fiber (200) on the one side (Z) in the first direction (Z-Z') relative to the at least one edge (EG) with a gap therebetween,
   the at least one first resin part (300') has a predetermined viscosity, and
   the applying of the at least one first resin part (300') further includes allowing the applied at least one first resin part (300') to stop at the gap between the at least one edge (EG) and the at least one optical fiber (200).
Clause 9. The method according to clause 6, 7 or 8, wherein the applying of the second resin part (400') further includes allowing the applied second resin part (400') to flow in the light reflecting groove (110) and the relief groove (130), from one side (X) in a third direction (X-X') to the other side (X') in the third direction (X-X'), and to fill the light reflecting groove (110) and the relief groove (130), and
   the third direction (X-X') is substantially orthogonal to the first direction (Z-Z') and the second direction (Y-Y').
Clause 10. The method according to any one of the preceding clauses, wherein
   The method further comprises, after the arranging of the at least one optical fiber (200) on the base (100), arranging a retainer (600) on the first face (101) of the base (100),
   the arranging of the retainer (600) includes holding the fixable portion (220) of the at least one optical fiber (200) between the base (100) and the retainer (600), and
   the applying of the at least one first resin part (300') is performed after the arranging of the retainer (600).
Clause 11. An optical fiber assembly (A1) comprising:
   a base (100) including
      a first face (101) on one side (Z) in a first direction (Z-Z'), the first direction (Z-Z') being a thickness direction of the base (100),
      a light reflecting groove (110) being a groove opening to the one side (Z) in the first direction (Z-Z'), the light reflecting groove (110) including a mirror face (111) on one side (Y) in a second direction (Y-Y') and an opposite face (112) facing the mirror face (111), the second direction (Y-Y') being substantially orthogonal to the first direction (Z-Z'),
      at least one positioning groove (120) being at least one elongated groove extending from the light reflecting groove (110) to the other side (Y') in the second direction (Y-Y'), opening to the one side (Z) in the first direction (Z-Z'), and communicating with the light reflecting groove (110), and
      a relief groove (130) being a close-bottomed hole extending from the light reflecting groove (110) to the other side (Z') in the first direction (Z-Z'), the relief groove (130) communicating with the light reflecting groove (110) and the at least one positioning groove (120), or alternatively communicating with the light reflecting groove (110) and communicating with the at least one positioning groove (120) via the light reflecting groove (110), wherein the light reflecting groove (110), the at least one positioning groove (120), and the relief groove (130) are provided in the first face (101) of the base (100);
   at least one optical fiber (200) including
      a distal portion (210) on the one side (Y) in the second direction (Y-Y'), the distal portion (210) including a distal face (211) on the one side (Y) in the second direction (Y-Y') of the at least one optical fiber (200), and being arranged in the light reflecting groove (110) such that the distal face (211) faces the mirror face (111) of the light reflecting groove (110), and
      a fixable portion (220) on the other side (Y') in the second direction (Y-Y') relative to the distal portion (210), the fixable portion (220) of the at least one optical fiber (200) being arranged in the at least one positioning groove (120);
   at least one first resin part (300) including
      a first portion (310) filling the relief groove (130) at least partly, and
      a second portion (320) filling the at least one positioning groove (120) and fixing the fixable portion (220) of the at least one optical fiber (200) to a wall (121) of the at least one positioning groove (120); and
   a second resin part (400) having translucency, having a refractive index substantially equal to a refractive index of a core of the at least one optical fiber (200) and/or having a refractive index of approximately 1.4 to approximately 1.6, filling at least the light reflecting groove (110), and being fixed to the first portion (310) of the at least one first resin part (300), the mirror face (111) of the light reflecting groove (110), the opposite face (112) of the light reflecting groove (110), and the distal portion (210) of the at least one optical fiber (200).
Clause 12. The optical fiber assembly (A1) according to clause 11, wherein
   the at least one first resin part (300) further includes a third portion (330) arranged in the light reflecting groove (110),
   the first portion (310), the third portion (330), and the second portion (320) of the at least one first resin part (300) are arranged continuously in this order, and
   the second resin part (400) is also fixed to the third portion (330) of the at least one first resin part (300).
Clause 13. The optical fiber assembly (A1) according to clause 11 or 12, wherein
   the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
   the light reflecting groove (110) of the base (100) extends in the third direction (X-X') and communicates with the plurality of positioning grooves (120),
   the relief groove (130) of the base (100) extends in the third direction (X-X'),
   the relief groove (130) of the base (100) communicates with the light reflecting groove (110) and the plurality of positioning grooves (120), or alternatively communicates with the light reflecting groove (110) and communicates with the plurality of positioning grooves (120) via the light reflecting groove (110),
   the at least one optical fiber (200) comprises a plurality of optical fibers (200),
   the fixable portions (220) of the plurality of the optical fibers (200) are arranged in the respective positioning grooves (120),
   the distal portions (210) of the plurality of the optical fibers (200) are arranged in the light reflecting groove (110) such that the distal faces (211) face the mirror face (111) of the light reflecting groove (110),
   the at least one first resin part (300) comprises a plurality of first resin parts (300),
   the first portions (310) of the plurality of the first resin parts (300) fill the relief groove (130) at least partly,
   the second portions (320) of the plurality of first resin parts (300) fill the respective positioning grooves (120) and fix the fixable portions (220) of the plurality of optical fibers (200) to the respective walls (121) of the plurality of positioning grooves (120), and
   the second resin part (400) is fixed to the first portions (310) of the plurality of first resin parts (300), the mirror face (111) of the light reflecting groove (110), the opposite face (112) of the light reflecting groove (110), and the distal portions (210) of the plurality of optical fibers (200).
Clause 14. The optical fiber assembly (A1) according to clause 13, wherein the first portions (310) of the plurality of first resin parts (300) are integrated together in the relief groove (130).
Clause 15. An optical fiber assembly (A2) comprising:
   a base (100) including
      a first face (101) on one side (Z) in a first direction (Z-Z'), the first direction being a thickness direction of the base (100),
      a light reflecting groove (110) being a groove opening to the one side (Z) in the first direction (Z-Z'), the light reflecting groove (110) including a mirror face (111) on one side (Y) in a second direction (Y-Y') and an opposite face (112) facing the mirror face (111), the second direction (Y-Y') being substantially orthogonal to the first direction (Z-Z'),
      at least one positioning groove (120) being at least one elongated groove extending from the light reflecting groove (110) to the other side (Y') in the second direction (Y-Y'), opening to the one side (Z) in the first direction (Z-Z'), and communicating with the light reflecting groove (110), and
      a relief groove (130) being a close-bottomed hole extending from the light reflecting groove (110) to the other side (Z') in the first direction (Z-Z'), the relief groove (130) communicating with the light reflecting groove (110) and the at least one positioning groove (120), wherein the light reflecting groove (110), the at least one positioning groove (120), and the relief groove (130) are provided in the first face (101) of the base (100);
   at least one optical fiber (200) including
      a distal portion (210) on the one side (Y) in the second direction (Y-Y'), the distal portion (210) including a distal face (211) on the one side (Y) in the second direction (Y-Y') of the at least one optical fiber (200), and being arranged in the light reflecting groove (110) such that the distal face (211) faces the mirror face (111) of the light reflecting groove (110), and
      a fixable portion (220) on the other side (Y') in the second direction (Y-Y') relative to the distal portion (210), the fixable portion (220) of the at least one optical fiber (200) being arranged in the at least one positioning groove (120);
   at least one first resin part (300') filling the at least one positioning groove (120) and fixing the fixable portion (220) of the at least one optical fiber (200) to a wall (121) of the at least one positioning groove (120); and
   a second resin part (400') having translucency, having a refractive index substantially equal to a refractive index of a core of the at least one optical fiber (200) and/or having a refractive index of approximately 1.4 to approximately 1.6, filling the light reflecting groove (110) and the relief groove (130), and being fixed to the at least one first resin part (300'), the mirror face (111) of the light reflecting groove (110), the opposite face (112) of the light reflecting groove (110), and the distal portion (210) of the at least one optical fiber (200).
Clause 16. The optical fiber assembly (A2) according to clause 15, wherein
   the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
   the light reflecting groove (110) of the base (100) extends in the third direction (X-X') and communicates with the plurality of positioning grooves (120),
   the relief groove (130) of the base (100) extends in the third direction (X-X') and communicates with the light reflecting groove (110) and the plurality of positioning grooves (120),
   the at least one optical fiber (200) comprises a plurality of optical fibers (200),
   the fixable portions (220) of the plurality of the optical fibers (200) are arranged in the respective positioning grooves (120),
   the distal portions (210) of the plurality of the optical fibers (200) are arranged in the light reflecting groove (110) such that the distal faces (211) face the mirror face (111) of the light reflecting groove (110),
   the at least one first resin part (300') comprises a plurality of first resin parts (300'), the plurality of first resin parts (300') filling the respective positioning grooves (120) and fixing the fixable portions (220) of the plurality of optical fibers (200) to the respective walls (121) of the plurality of positioning grooves (120), and
   the second resin part (400') is fixed to the plurality of first resin parts (300'), the mirror face (111) of the light reflecting groove (110), the opposite face (112) of the light reflecting groove (110), and the distal portions (210) of the plurality of optical fibers (200).
Clause 17. The optical fiber assembly (A2) according to clause 15 or 16, wherein
   the base (100) further includes at least one edge (EG),
   the at least one edge (EG) is a portion where a wall (131) on the other side (Y') in the second direction (Y-Y') of the relief groove (130) meets the wall (121) of the at least one positioning groove (120),
   the at least one optical fiber (200) is arranged on the one side (Z) in the first direction (Z-Z') relative to the at least one edge (EG) with a gap therebetween, and
   the at least one first resin part (300') fills the at least one positioning groove (120) up to the gap between the at least one edge (EG) and the at least one optical fiber (200).
Clause 18. The optical fiber assembly (A1, A2) according to any one of clauses 11 to 17, further comprising a retainer (600) arranged on the first face (101) of the base (100),
   wherein the base (100) and the retainer (600) hold therebetween the fixable portion (220) of the at least one optical fiber (200).
Clause 19. The optical fiber assembly (A1, A2) according to any one of clauses 11 to 18, further comprising an optical device (500) mounted on the first face (101) of the base (100) and optically connected to the core of the at least one optical fiber (200) via the mirror face (111) of the light reflecting groove (110), wherein
   the optical device (500) includes a facing portion (510) facing the mirror face (111) of the light reflecting groove (110), and
   the second resin part (400, 400') is also fixed to the facing portion (510).

## Claims

1. A method for manufacturing an optical fiber assembly (A1), the method comprising:
preparing a base (100);
preparing at least one optical fiber (200);
arranging the at least one optical fiber (200) on the base (100);
applying at least one first resin part (300);
solidifying the applied at least one first resin part (300);
applying a second resin part (400) having translucency, and having a refractive index substantially equal to a refractive index of a core of the at least one optical fiber (200) and/or having a refractive index of approximately 1.4 to approximately 1.6; and
solidifying the applied second resin part (400), wherein
the base (100) includes a first face (101) with a light reflecting groove (110), at least one positioning groove (120), and a relief groove (130), the first face (101) is a face of the base (100) on one side (Z) in a first direction (Z-Z'), and the first direction (Z-Z') is a thickness direction of the base (100),
the light reflecting groove (110) is a groove opening to the one side (Z) in the first direction (Z-Z') and includes a mirror face (111) on one side (Y) in a second direction (Y-Y') and an opposite face (112) facing the mirror face (111), the second direction (Y-Y') being substantially orthogonal to the first direction (Z-Z'),
the at least one positioning groove (120) is at least one elongated groove extending from the light reflecting groove (110) to the other side (Y') in the second direction (Y-Y'), opening to the one side (Z) in the first direction (Z-Z'), and communicating with the light reflecting groove (110),
the relief groove (130) is a close-bottomed hole extending from the light reflecting groove (110) to the other side (Z') in the first direction (Z-Z'),
the relief groove (130) communicates with the light reflecting groove (110) and the at least one positioning groove (120), or alternatively communicates with the light reflecting groove (110) and communicates with the at least one positioning groove (120) via the light reflecting groove (110),
the at least one optical fiber (200) includes a distal portion (210) on the one side (Y) in the second direction (Y-Y') and a fixable portion (220) on the other side (Y') in the second direction (Y-Y') relative to the distal portion (210), and the distal portion (210) of the at least one optical fiber (200) includes a distal face (211) on the one side (Y) in the second direction (Y-Y') of the at least one optical fiber (200), and
the arranging of the at least one optical fiber (200) on the base (100) includes arranging the fixable portion (220) of the at least one optical fiber (200) into the at least one positioning groove (120) and arranging the distal portion (210) of the at least one optical fiber (200) into the light reflecting groove (110) such that the distal face (211) of the at least one optical fiber (200) faces the mirror face (111) of the light reflecting groove (110),
the applying of the at least one first resin part (300) includes, after the arranging of the at least one optical fiber (200) on the base (100), applying the at least one first resin part (300) in a molten state into the at least one positioning groove (120), allowing a first portion (310) of the at least one applied first resin part (300) to flow through the at least one positioning groove (120), or alternatively through the at least one positioning groove (120) and the light reflecting groove (110), and then into the relief groove (130), and allowing a second portion (320) of the at least one applied first resin part (300) to flow into the at least one positioning groove (120) and to adhere to the fixable portion (220) of the at least one optical fiber (200) and a wall (121) of the at least one positioning groove (120),
the solidifying of the at least one first resin part (300) includes solidifying the first portion (310) of the at least one first resin part (300) in the relief groove (130) and solidifying the second portion (320) of the at least one first resin part (300) in the at least one positioning groove (120) to fix the fixable portion (220) of the at least one optical fiber (200) to the wall (121) of the at least one positioning groove (120), and
the applying of the second resin part (400) includes, after the solidifying of the at least one first resin part (300), applying the second resin part (400) in a molten state into the light reflecting groove (110) so that the second resin part (400) fills at least the light reflecting groove (110) and adheres to the first portion (310) of the at least one solidified first resin part (300), the mirror face (111) of the light reflecting groove (110), the opposite face (112) of the light reflecting groove (110), and the distal portion (210) of the at least one optical fiber (200).

2. The method according to claim 1, wherein
the applying of the at least one first resin part (300) further includes allowing the at least one molten first resin part (300) to flow into the at least one positioning groove (120), the light reflecting groove (110), and the relief groove (130) in this order, wherein a portion of the at least one first resin part (300) that has flowed into the at least one positioning groove (120) forms the second portion (320) of the at least one first resin part (300), a portion of the at least one first resin part (300) that has flowed into the light reflecting groove (110) forms a third portion (330) of the at least one first resin part (300), and a portion of the at least one first resin part (300) that has flowed into the relief groove (130) forms the first portion (310) of the at least one first resin part (300), and
the solidifying of the at least one first resin part (300) further includes solidifying the third portion (330) of the at least one first resin part (300) in the light reflecting groove (110).

3. The method according to claim 1 or 2, wherein
the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
the light reflecting groove (110) of the base (100) extends in the third direction (X-X') and communicates with the plurality of positioning grooves (120),
the relief groove (130) of the base (100) extends in the third direction (X-X'),
the relief groove (130) of the base (100) communicates with the light reflecting groove (110) and the plurality of positioning grooves (120), or alternatively communicates with the light reflecting groove (110) and communicates with the plurality of positioning grooves (120) via the light reflecting groove (110),
the at least one optical fiber (200) comprises a plurality of optical fibers (200),
the arranging of the at least one optical fiber (200) on the base (100) includes arranging the fixable portions (220) of the plurality of optical fibers (200) into the respective positioning grooves (120) and arranging the distal portions (210) of the plurality of optical fibers (200) into the light reflecting groove (110) such that the distal faces (211) of the plurality of optical fibers (200) oppose the mirror face (111) of the light reflecting groove (110),
the applying of the at least one first resin part (300) includes, after the arranging of the plurality of optical fibers (200) on the base (100), applying a plurality of the first resin parts (300) in a molten state into the respective positioning grooves (120), allowing the first portions (310) of the plurality of applied first resin parts (300) to flow through the respective positioning grooves (120), or alternatively through the respective positioning grooves (120) and the light reflecting groove (110), and then into the relief groove (130), and allowing the second portions (320) of the plurality of applied first resin parts (300) to flow into the respective positioning grooves (120) and to adhere to the respective fixable portions (220) of the plurality of optical fibers (200) and the respective walls (121) of the plurality of positioning grooves (120),
the solidifying of the at least one first resin part (300) includes solidifying the first portions (310) of the plurality of first resin parts (300) in the relief groove (130) and solidifying the second portions (320) of the plurality of first resin parts (300) in the respective positioning grooves (120) to fix the fixable portions (220) of the plurality of optical fibers (200) to the respective walls (121) of the plurality of positioning grooves (120), and
the applying of the second resin part (400) includes allowing the second resin part (400) having filled at least the light reflecting groove (110) to adhere to the first portions (310) of the plurality of solidified first resin parts (300), the mirror face (111) of the light reflecting groove (110), the opposite face (112) of the light reflecting groove (110), and the distal portions (210) of the plurality of optical fibers (200).

4. The method according to claim 3, wherein the applying of the plurality of first resin parts (300) further includes allowing the first portions (310) of the plurality of first resin parts (300), which have flowed into the relief groove (130), to be integrated together in the relief groove (130).

5. The method according to any one of the preceding claims, wherein the applying of the second resin part (400) further includes allowing the applied second resin part (400) to flow in the light reflecting groove (110), from one side (X) in the third direction (X-X') to the other side (X') in the third direction (X-X'), and to fill at least the light reflecting groove (110).

6. A method for manufacturing an optical fiber assembly (A2), the method comprising:
preparing a base (100);
preparing at least one optical fiber (200);
arranging the at least one optical fiber (200) on the base (100);
applying at least one first resin part (300');
solidifying the applied at least one first resin part (300');
applying a second resin part (400') having translucency, and having a refractive index substantially equal to a refractive index of a core of the at least one optical fiber (200) and/or having a refractive index of approximately 1.4 to approximately 1.6; and
solidifying the applied second resin part (400'), wherein
the base (100) includes a first face (101) with a light reflecting groove (110), at least one positioning groove (120), and a relief groove (130), the first face (101) is a face of the base (100) on one side (Z) in a first direction (Z-Z'), and the first direction (Z-Z') is a thickness direction of the base (100),
the light reflecting groove (110) is a groove opening to the one side (Z) in the first direction (Z-Z') and includes a mirror face (111) on one side (Y) in a second direction (Y-Y') and an opposite face (112) facing the mirror face (111), the second direction (Y-Y') being substantially orthogonal to the first direction (Z-Z'),
the at least one positioning groove (120) is at least one elongated groove extending from the light reflecting groove (110) to the other side (Y') in the second direction (Y-Y'), opening to the one side (Z) in the first direction (Z-Z'), and communicating with the light reflecting groove (110),
the relief groove (130) is a close-bottomed hole extending from the light reflecting groove (110) to the other side (Z') in the first direction (Z-Z') and communicates with the light reflecting groove (110) and the at least one positioning groove (120),
the at least one optical fiber (200) includes a distal portion (210) on the one side (Y) in the second direction (Y-Y') and a fixable portion (220) on the other side (Y') in the second direction (Y-Y') relative to the distal portion (210), and the distal portion (210) of the at least one optical fiber (200) includes a distal face (211) on the one side (Y) in the second direction (Y-Y') of the at least one optical fiber (200), and
the arranging of the at least one optical fiber (200) on the base (100) includes arranging the fixable portion (220) of the at least one optical fiber (200) into the at least one positioning groove (120) and arranging the distal portion (210) of the at least one optical fiber (200) into the light reflecting groove (110) such that the distal face (211) of the at least one optical fiber (200) faces the mirror face (111) of the light reflecting groove (110),
the applying of the at least one first resin part (300') includes, after the arranging of the at least one optical fiber (200) on the base (100), applying the at least one first resin part (300') in a molten state into the at least one positioning groove (120), and allowing the at least one applied first resin part (300') to adhere to the fixable portion (220) of the at least one optical fiber (200) and a wall (121) of the at least one positioning groove (120),
the solidifying of the at least one first resin part (300') includes solidifying the at least one first resin part (300') in the at least one positioning groove (120) to fix the fixable portion (220) of the at least one optical fiber (200) to the wall (121) of the at least one positioning groove (120), and
the applying of the second resin part (400') includes, after the solidifying of the at least one first resin part (300'), applying the second resin part (400') in a molten state into the light reflecting groove (110) and/or the relief groove (130) so that the second resin part (400') fills the light reflecting groove (110) and the relief groove (130) and adheres to the at least one first resin part (300'), the mirror face (111) of the light reflecting groove (110), the opposite face (112) of the light reflecting groove (110), and the distal portion (210) of the at least one optical fiber (200).

7. The method according to claim 6, wherein
the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
the light reflecting groove (110) of the base (100) extends in the third direction (X-X') and communicates with the plurality of positioning grooves (120),
the relief groove (130) of the base (100) extends in the third direction (X-X') and communicates with the light reflecting groove (110) and the plurality of positioning grooves (120),
the at least one optical fiber (200) comprises a plurality of optical fibers (200),
the arranging of the at least one optical fiber (200) on the base (100) includes arranging the fixable portions (220) of the plurality of optical fibers (200) into the respective positioning grooves (120) and arranging the distal portions (210) of the plurality of optical fibers (200) into the light reflecting groove (110) such that the distal faces (211) of the plurality of optical fibers (200) oppose the mirror face (111) of the light reflecting groove (110),
the applying of the at least one first resin part (300') includes, after the arranging of the plurality of optical fibers (200) on the base (100), applying a plurality of the first resin parts (300') in a molten state into the respective positioning grooves (120), and allowing the plurality of first resin parts (300') to adhere to the respective fixable portions (220) of the plurality of optical fibers (200) and the respective walls (121) of the plurality of positioning grooves (120),
the solidifying of the at least one first resin part (300') includes solidifying the plurality of first resin parts (300') in the respective positioning grooves (120) to fix the fixable portions (220) of the plurality of optical fibers (200) to the respective walls (121) of the plurality of positioning grooves (120), and
the applying of the second resin part (400') includes allowing the second resin part (400') having filled the light reflecting groove (110) and the relief groove (130) to adhere to the plurality of first resin parts (300'), the mirror face (111) of the light reflecting groove (110), the opposite face (112) of the light reflecting groove (110), and the distal portions (210) of the plurality of optical fibers (200).

8. The method according to claim 6 or 7, wherein
a wall (131) on the other side (Y') in the second direction (Y-Y') of the relief groove (130) meets the wall (121) of the at least one positioning groove (120), and at least one portion where the wall (131) of the relief groove (130) meets the wall (121) of the at least one positioning groove (120) forms at least one edge (EG),
the arranging of the fixable portion (220) of the at least one optical fiber (200) in the at least one positioning groove (120) further includes arranging the at least one optical fiber (200) on the one side (Z) in the first direction (Z-Z') relative to the at least one edge (EG) with a gap therebetween,
the at least one first resin part (300') has a predetermined viscosity, and
the applying of the at least one first resin part (300') further includes allowing the applied at least one first resin part (300') to stop at the gap between the at least one edge (EG) and the at least one optical fiber (200).

9. The method according to claim 6, 7 or 8, wherein the applying of the second resin part (400') further includes allowing the applied second resin part (400') to flow in the light reflecting groove (110) and the relief groove (130), from one side (X) in a third direction (X-X') to the other side (X') in the third direction (X-X'), and to fill the light reflecting groove (110) and the relief groove (130), and
the third direction (X-X') is substantially orthogonal to the first direction (Z-Z') and the second direction (Y-Y').

10. An optical fiber assembly (A1) comprising:
a base (100) including
a first face (101) on one side (Z) in a first direction (Z-Z'), the first direction (Z-Z') being a thickness direction of the base (100),
a light reflecting groove (110) being a groove opening to the one side (Z) in the first direction (Z-Z'), the light reflecting groove (110) including a mirror face (111) on one side (Y) in a second direction (Y-Y') and an opposite face (112) facing the mirror face (111), the second direction (Y-Y') being substantially orthogonal to the first direction (Z-Z'),
at least one positioning groove (120) being at least one elongated groove extending from the light reflecting groove (110) to the other side (Y') in the second direction (Y-Y'), opening to the one side (Z) in the first direction (Z-Z'), and communicating with the light reflecting groove (110), and
a relief groove (130) being a close-bottomed hole extending from the light reflecting groove (110) to the other side (Z') in the first direction (Z-Z'), the relief groove (130) communicating with the light reflecting groove (110) and the at least one positioning groove (120), or alternatively communicating with the light reflecting groove (110) and communicating with the at least one positioning groove (120) via the light reflecting groove (110), wherein the light reflecting groove (110), the at least one positioning groove (120), and the relief groove (130) are provided in the first face (101) of the base (100);
at least one optical fiber (200) including
a distal portion (210) on the one side (Y) in the second direction (Y-Y'), the distal portion (210) including a distal face (211) on the one side (Y) in the second direction (Y-Y') of the at least one optical fiber (200), and being arranged in the light reflecting groove (110) such that the distal face (211) faces the mirror face (111) of the light reflecting groove (110), and
a fixable portion (220) on the other side (Y') in the second direction (Y-Y') relative to the distal portion (210), the fixable portion (220) of the at least one optical fiber (200) being arranged in the at least one positioning groove (120);
at least one first resin part (300) including
a first portion (310) filling the relief groove (130) at least partly, and
a second portion (320) filling the at least one positioning groove (120) and fixing the fixable portion (220) of the at least one optical fiber (200) to a wall (121) of the at least one positioning groove (120); and
a second resin part (400) having translucency, having a refractive index substantially equal to a refractive index of a core of the at least one optical fiber (200) and/or having a refractive index of approximately 1.4 to approximately 1.6, filling at least the light reflecting groove (110), and being fixed to the first portion (310) of the at least one first resin part (300), the mirror face (111) of the light reflecting groove (110), the opposite face (112) of the light reflecting groove (110), and the distal portion (210) of the at least one optical fiber (200).

11. The optical fiber assembly (A1) according to claim 10, wherein
the at least one first resin part (300) further includes a third portion (330) arranged in the light reflecting groove (110),
the first portion (310), the third portion (330), and the second portion (320) of the at least one first resin part (300) are arranged continuously in this order, and
the second resin part (400) is also fixed to the third portion (330) of the at least one first resin part (300).

12. The optical fiber assembly (A1) according to claim 10 or 11, wherein
the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
the light reflecting groove (110) of the base (100) extends in the third direction (X-X') and communicates with the plurality of positioning grooves (120),
the relief groove (130) of the base (100) extends in the third direction (X-X'),
the relief groove (130) of the base (100) communicates with the light reflecting groove (110) and the plurality of positioning grooves (120), or alternatively communicates with the light reflecting groove (110) and communicates with the plurality of positioning grooves (120) via the light reflecting groove (110),
the at least one optical fiber (200) comprises a plurality of optical fibers (200),
the fixable portions (220) of the plurality of the optical fibers (200) are arranged in the respective positioning grooves (120),
the distal portions (210) of the plurality of the optical fibers (200) are arranged in the light reflecting groove (110) such that the distal faces (211) face the mirror face (111) of the light reflecting groove (110),
the at least one first resin part (300) comprises a plurality of first resin parts (300),
the first portions (310) of the plurality of the first resin parts (300) fill the relief groove (130) at least partly,
the second portions (320) of the plurality of first resin parts (300) fill the respective positioning grooves (120) and fix the fixable portions (220) of the plurality of optical fibers (200) to the respective walls (121) of the plurality of positioning grooves (120), and
the second resin part (400) is fixed to the first portions (310) of the plurality of first resin parts (300), the mirror face (111) of the light reflecting groove (110), the opposite face (112) of the light reflecting groove (110), and the distal portions (210) of the plurality of optical fibers (200).

13. An optical fiber assembly (A2) comprising:
a base (100) including
a first face (101) on one side (Z) in a first direction (Z-Z'), the first direction being a thickness direction of the base (100),
a light reflecting groove (110) being a groove opening to the one side (Z) in the first direction (Z-Z'), the light reflecting groove (110) including a mirror face (111) on one side (Y) in a second direction (Y-Y') and an opposite face (112) facing the mirror face (111), the second direction (Y-Y') being substantially orthogonal to the first direction (Z-Z'),
at least one positioning groove (120) being at least one elongated groove extending from the light reflecting groove (110) to the other side (Y') in the second direction (Y-Y'), opening to the one side (Z) in the first direction (Z-Z'), and communicating with the light reflecting groove (110), and
a relief groove (130) being a close-bottomed hole extending from the light reflecting groove (110) to the other side (Z') in the first direction (Z-Z'), the relief groove (130) communicating with the light reflecting groove (110) and the at least one positioning groove (120), wherein the light reflecting groove (110), the at least one positioning groove (120), and the relief groove (130) are provided in the first face (101) of the base (100);
at least one optical fiber (200) including
a distal portion (210) on the one side (Y) in the second direction (Y-Y'), the distal portion (210) including a distal face (211) on the one side (Y) in the second direction (Y-Y') of the at least one optical fiber (200), and being arranged in the light reflecting groove (110) such that the distal face (211) faces the mirror face (111) of the light reflecting groove (110), and
a fixable portion (220) on the other side (Y') in the second direction (Y-Y') relative to the distal portion (210), the fixable portion (220) of the at least one optical fiber (200) being arranged in the at least one positioning groove (120);
at least one first resin part (300') filling the at least one positioning groove (120) and fixing the fixable portion (220) of the at least one optical fiber (200) to a wall (121) of the at least one positioning groove (120); and
a second resin part (400') having translucency, having a refractive index substantially equal to a refractive index of a core of the at least one optical fiber (200) and/or having a refractive index of approximately 1.4 to approximately 1.6, filling the light reflecting groove (110) and the relief groove (130), and being fixed to the at least one first resin part (300'), the mirror face (111) of the light reflecting groove (110), the opposite face (112) of the light reflecting groove (110), and the distal portion (210) of the at least one optical fiber (200).

14. The optical fiber assembly (A2) according to claim 13, wherein
the at least one positioning groove (120) of the base (100) comprises a plurality of positioning grooves (120) spaced apart from each other in a third direction (X-X'), the third direction being substantially orthogonal to the first (Z-Z') and second (Y-Y') directions,
the light reflecting groove (110) of the base (100) extends in the third direction (X-X') and communicates with the plurality of positioning grooves (120),
the relief groove (130) of the base (100) extends in the third direction (X-X') and communicates with the light reflecting groove (110) and the plurality of positioning grooves (120),
the at least one optical fiber (200) comprises a plurality of optical fibers (200),
the fixable portions (220) of the plurality of the optical fibers (200) are arranged in the respective positioning grooves (120),
the distal portions (210) of the plurality of the optical fibers (200) are arranged in the light reflecting groove (110) such that the distal faces (211) face the mirror face (111) of the light reflecting groove (110),
the at least one first resin part (300') comprises a plurality of first resin parts (300'), the plurality of first resin parts (300') filling the respective positioning grooves (120) and fixing the fixable portions (220) of the plurality of optical fibers (200) to the respective walls (121) of the plurality of positioning grooves (120), and
the second resin part (400') is fixed to the plurality of first resin parts (300'), the mirror face (111) of the light reflecting groove (110), the opposite face (112) of the light reflecting groove (110), and the distal portions (210) of the plurality of optical fibers (200).

15. The optical fiber assembly (A2) according to claim 13 or 14, wherein
the base (100) further includes at least one edge (EG),
the at least one edge (EG) is a portion where a wall (131) on the other side (Y') in the second direction (Y-Y') of the relief groove (130) meets the wall (121) of the at least one positioning groove (120),
the at least one optical fiber (200) is arranged on the one side (Z) in the first direction (Z-Z') relative to the at least one edge (EG) with a gap therebetween, and
the at least one first resin part (300') fills the at least one positioning groove (120) up to the gap between the at least one edge (EG) and the at least one optical fiber (200).
